# EUROPEAN PATENT APPLICATION

(11) **EP 4 736 969 A1**
(43) Date of publication of application: **06.05.2026**
(21) Application number: 24839841.4
(22) Date of filing: 24.01.2024
(51) Int. Cl.: A63F 13/23, A63F 13/355, H04N 21/478, H04N 21/222, H04N 21/431, H04N 21/81

(54) **DISPLAY DEVICE AND OPERATION METHOD THEREOF**

(30) Priority: 07.07.2023 KR 20230088622
(71) Applicant: Samsung Electronics Co., Ltd., Suwon-si, Gyeonggi-do 16677 (KR)
(72) Inventor: LEE, Jongin, Suwon-si, Gyeonggi-do 16677 (KR); KIM, Sehyun, Suwon-si, Gyeonggi-do 16677 (KR); KIM, Donguk, Suwon-si, Gyeonggi-do 16677 (KR); PARK, Jaeim, Suwon-si, Gyeonggi-do 16677 (KR)
(74) Representative: Walaski, Jan Filip
(86) International application number: PCT/KR2024/001130
(87) International publication number: WO 2025/014020

(57) **Abstract**

A display apparatus including: a display; a communication interface; a memory configured to store at least one instruction; a processor configured to execute the at least one instruction stored in the memory to: receive, from an input device, an input instructing execution of a game launcher providing at least one game application, identify a type of the input device, transmit information about the type of the input device to a game server corresponding to the game launcher, receive, from the game server, information about the at least one game application that is controllable based on the type of the input device and configure a user interface screen provided by the game launcher based on the information about the at least one game application that is controllable based on the type of the input device, and display the user interface screen.

## Description

### TECHNICAL FIELD

The disclosure relates to a display apparatus and a method of operating the display apparatus, and more particularly, to a display apparatus using a server and an input device and a method of operating the display apparatus.

### TECHNICAL FIELD

Recently, the number of game users has increased, and the demand to enjoy game content through large-screen TVs to increase immersion in games is increasing.

A cloud game is a game service that performs major operations such as graphic processing required for the game on a cloud server, transmits a user's control input from a user device such as a smart phone or smart TV to the server, and displays a rendered game screen on the user device upon receiving the rendered game screen through IP-streaming.

### DISCLOSURE

### TECHNICAL SOLUTION

According to an embodiment of the disclosure of the disclosure, there are provided a display apparatus capable of improving convenience of use by receiving and displaying information about game applications that are controllable by a user's input device, a method of operating the display apparatus, and a non-transitory computer-readable storage medium.

It should be noted that technical objectives of the disclosure are not limited to the above-described technical objectives, and other technical objectives will be apparent to those of skill in the art from the following embodiments.

According to an embodiment of the disclosure, a display apparatus may include a display, a communication interface, a memory configured to store at least one instruction, and a processor configured to execute the at least one instruction stored in the memory. The processor may be configured to execute the at least one instruction to receive, from an input device, an input instructing execution of a game launcher providing at least one application. The processor may be configured to execute the at least one instruction to identify a type of the input device. The processor may be configured to execute the at least one instruction to transmit information about the type of the input device to a game server corresponding to the game launcher. The processor may be configured to execute the at least one instruction to receive, from the game server, information about at least one application that is controllable based on the type of the input device. The processor may be configured to execute the at least one instruction to configure a user interface screen provided by the game launcher based on the information about the at least one game application that is controllable based on the type of the input device, and display the user interface screen.

According to an embodiment of the disclosure, a method of operating a display apparatus may include receiving, from an input device, an input instructing execution of a game launcher providing at least one game application. The method of operating the display apparatus may include identifying a type of the input device. The method of operating the display apparatus may include transmitting information about the type of the input device to a game server corresponding to the game launcher. The method of operating the display apparatus may include receiving, from the game server, information about at least one game application that is controllable based on the type of the input device. The method of operating the display apparatus may include configuring a user interface screen provided by the game launcher based on the information about the at least one game application that is controllable based on the type of the input device, and displaying the user interface screen.

According to an embodiment of the disclosure, there is provided a computer-readable recording medium on which at least one program being executed by a processor of a display apparatus are recorded to implement a method of operating the display apparatus, the method including receiving, from an input device, an input instructing execution of a game launcher providing at least one game application, identifying a type of the input device, transmitting information about the type of the input device to a game server corresponding to the game launcher, receiving, from the game server, information about at least one game application that is controllable based on the type of the input device, configuring a user interface screen provided by the game launcher based on the information about the at least one game application that is controllable based on the type of the input device, and displaying the user interface screen.

By the display apparatus, the method of operating the display apparatus, and a non-transitory computer-readable storage medium according to an embodiment of the disclosure, by providing information about game applications that are controllable by a user's input device, the user may be prevented from selecting a game application that is not controllable by the user's input device, resulting in an increase of convenience of use.

The effects which may be acquired by embodiments of the disclosure are not limited to the above-described effects, and other effects which have not been described will be clearly understood by those having ordinary knowledge in the art, to which the disclosure pertains, from the following description.

### DESCRIPTION OF DRAWINGS

The disclosure may be easily understood by combining the following detailed description with the accompanying drawings, and reference numerals represent structural elements.
FIG. 1 illustrates an example of a system including a game server and a display apparatus, according to various embodiments of the disclosure,
FIG. 2 illustrates an example of a system including a display apparatus, an input device, and a game server, according to an embodiment of the disclosure,
FIG. 3 is an example of a block diagram of a display apparatus according to an embodiment;
FIG. 4 is a flowchart illustrating an example of a method of operating a display apparatus, according to an embodiment of the disclosure.
FIG. 5 is a reference view for describing operation of providing information about applications from a game server to a display apparatus, according to an embodiment of the disclosure.
FIG. 6 illustrates an example of a gaming hub user interface screen according to an embodiment of the disclosure.
FIG. 7 illustrates an example of a server home user interface according to an embodiment of the disclosure.
FIG. 8 is a flowchart illustrating an example of a method of operating a display apparatus, according to an embodiment of the disclosure.
FIG. 9 illustrates an example of information about types of input devices capable of controlling game applications, according to an embodiment of the disclosure.
FIG. 10 illustrates an example of a flowchart of a game application execution control operation according to an embodiment of the disclosure.
FIG. 11 illustrates an example of a flowchart of a method of operating a display apparatus, according to an embodiment of the disclosure.
FIG. 12 is a flowchart illustrating an example of a method of operating a display apparatus, according to an embodiment of the disclosure.
FIG. 13 is a flowchart illustrating an example of a method of operating a display apparatus, according to an embodiment of the disclosure.
FIG. 14 is a flowchart illustrating an example of a method of operating a display apparatus, according to an embodiment of the disclosure.
FIG. 15 is a flowchart illustrating an example of a method of operating a display apparatus, according to an embodiment of the disclosure.
FIG. 16 is a reference view for describing a method of providing information about an input device capable of controlling a game application with a focus effect, according to an embodiment of the disclosure.
FIG. 17 is a reference view for describing an example of a message that is output according to a selection of a game application item, according to an embodiment of the disclosure.
FIG. 18 is a reference view for describing an example of a message that is output according to a selection of a connection item in FIG. 17, according to an embodiment of the disclosure.
FIG. 19 is a reference view for describing an example of a message that is output according to a selection of the connection item in FIG. 17, according to an embodiment of the disclosure.
FIG. 20 is a reference view for describing an operation method using a game application list in which types of input devices capable of controlling each game application are subdivided into possible/recommended/required and stored, according to an embodiment.

### MODE FOR INVENTION

Terms used in this specification will be briefly described, and the disclosure will be described in detail.

Although general terms being widely used were selected as terminology used in the disclosure while considering the functions of the disclosure, they may vary according to intentions of one of ordinary skill in the art, judicial precedents, the advent of new technologies, and the like. Terms arbitrarily selected by the applicant of the disclosure may also be used in a case. In this case, their meanings will be described in detail in the detailed description of the disclosure. Hence, the terms used in the disclosure may be defined based on the meanings of the terms and the contents of the entire specification, not by simply stating the terms themselves.

It will be understood that when a part "includes" a component, the part does not exclude another component but can further include another component, unless the context clearly dictates otherwise. As used herein, the terms "portion", "module", etc. refers to a unit that can perform at least one function or operation, and may be implemented as hardware, software, or a combination of hardware and software. Additionally, in the exemplary embodiments, the features therein can be processed by one processor or by a combination of processors.

Hereinafter, embodiments will be described in detail with reference to the accompanying drawings so that the disclosure may be readily implemented by one of ordinary skill in the technical field to which the disclosure pertains. However, the disclosure can be implemented in various different forms, and is not limited to the embodiments described herein. Also, in the drawings, portions irrelevant to the description are not shown to definitely describe the disclosure, and throughout the entire specification, similar components are assigned like reference numerals.

In the embodiments of the specification, the term "user" means a person who controls the functions or operations of an image display apparatus using a controller, and may include a viewer, a manager, or an installation engineer.

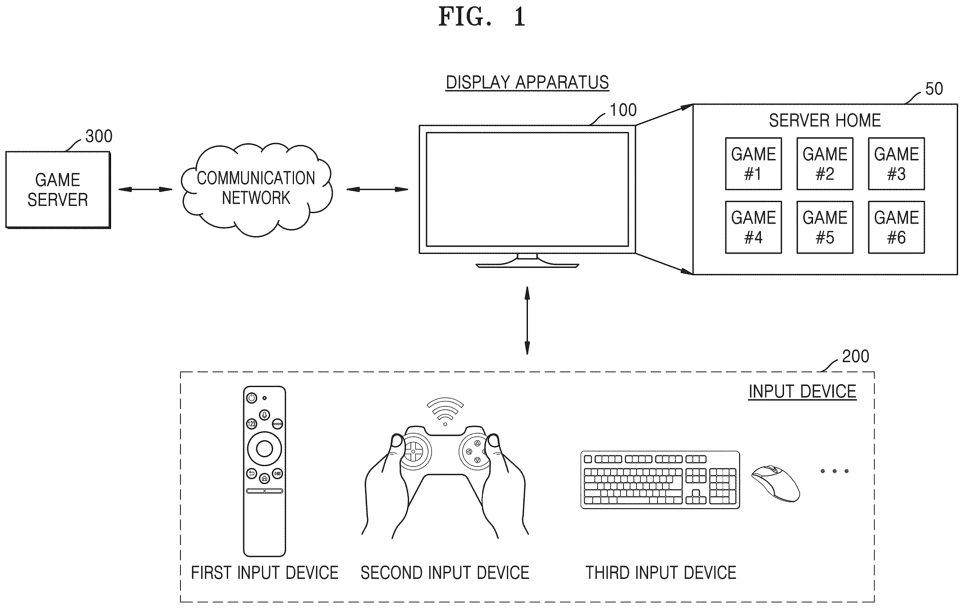

FIG. 1 illustrates an example of a system including a game server and a display apparatus, according to various embodiments of the disclosure.

Referring to FIG. 1, the system may include a display apparatus 100, an input device 200, and a game server 300.

In response to a request from the display apparatus 100, the game server 300 may provide the display apparatus 100 with information about one or more content applications that may be provided by the game server 300, through a communication network. The display apparatus 100 may configure a server home screen by receiving the information about the one or more content applications. Accordingly, the information about the one or more content applications may become a part of information for configuring the server home screen. The information about the one or more content applications may include, for example, information about one or more game applications.

The game server 300 may also execute a content application in response to a request from the display apparatus 100 and transmit a resultant screen according to the execution of the content application to the display apparatus 100 through the communication network. For example, upon reception of a request for executing a game application from the display apparatus 100 by the game server 300, the game server 300 may execute the game application and transmit a resultant screen or resultant image rendered according to the execution of the game application to the display apparatus 100 through the communication network.

The display apparatus 100 may request the game server 300 to send information about one or more content applications that are provided by the game server 300 from the game server 300, receive the information about the one or more content applications from the game server 300 according to the request, and display the information about the one or more content applications on a display. According to an embodiment of the disclosure, the display apparatus 100 may configure a server home screen to include the received information about the one or more content applications and display the server home screen on the display. For example, the server home screen may be a game server home screen 50 as shown in FIG. 1. The game server home screen 50 may include information about game applications that are provided by the game server 300. For example, a user may select an item Game #1 through the input device 200 to execute Game #1.

The display apparatus 100 may request the game server 300 to execute a content application, receive a resultant screen according to execution of the content application from the game server 300 in response to the execution request, and display the received resultant screen on the display. For example, according to a selection of the item Game #1 through the input device 200 by the user, the display apparatus 100 may transmit a request for executing Game #1 to the game server 300, receive a resultant screen according to execution of Game #1 from the game server 300, and display the received resultant screen of Game #1 on the display.

The input device 200 may transmit a control command for controlling a content application that is executed on the game server 300, to the display apparatus 100. The display apparatus 100 may transmit the control command received from the input device 200 to the game server 300, thereby causing the game server 300 to control the content application based on the control command. Controlling a content application according to a control command from the input device 200 may be controlling a play of the content application based on the control command from the input device 200. For example, an object included in game content may be controlled according to an input to a button of the input device 200 or a movement of a jog dial of the input device 200. Controlling an object may be performing operation, such as, for example, moving a character or firing a gun, according to a control command from the input device 200. The input device 200 may directly transmit a control command for controlling execution of a content application that is executed on the game server 300 to the game server 300 through the communication network.

A game service having a structure of transmitting a user's control input received by a user terminal such as the display apparatus 100 to a cloud server such as the game server 300, executing, at the cloud server, major operations such as graphic processing according to the user's control input, and streaming a game screen rendered by a cloud game application to the user terminal is called a cloud game service. However, one or more game applications provided by the game server 300 to provide such a cloud game service may require different input devices. There may be various input devices used to control game applications. For example, in FIG. 1, as examples of the input device 200, a first input device, a second input device, and a third input device are shown. The first input device represents a remote controller of a display apparatus, the second input device represents a gamepad, and the third input device represents a keyboard/mouse. The respective game applications may require different input devices. For example, in FIG. 1, Game #1 may be controlled by the first input device, and Game #2 may be controlled by the second input device. Also, for example, Game #3 may be controlled by the first input device and the third input device. As such, the respective game applications may be controlled by different types of input devices. Controlling game applications through input devices may be controlling execution of the game applications through the input devices. In the above example, according to a user's selection of the first input device to control Game #2, an application Game #2 will be not properly controlled. Accordingly, the user's operation which has intended to control Game #2 through the first input device may become useless, which may cause inconvenience to the user. Accordingly, embodiments of the disclosure may provide information about input devices capable of controlling one or more game applications that are provided by the game server 300, thereby improving convenience of use.

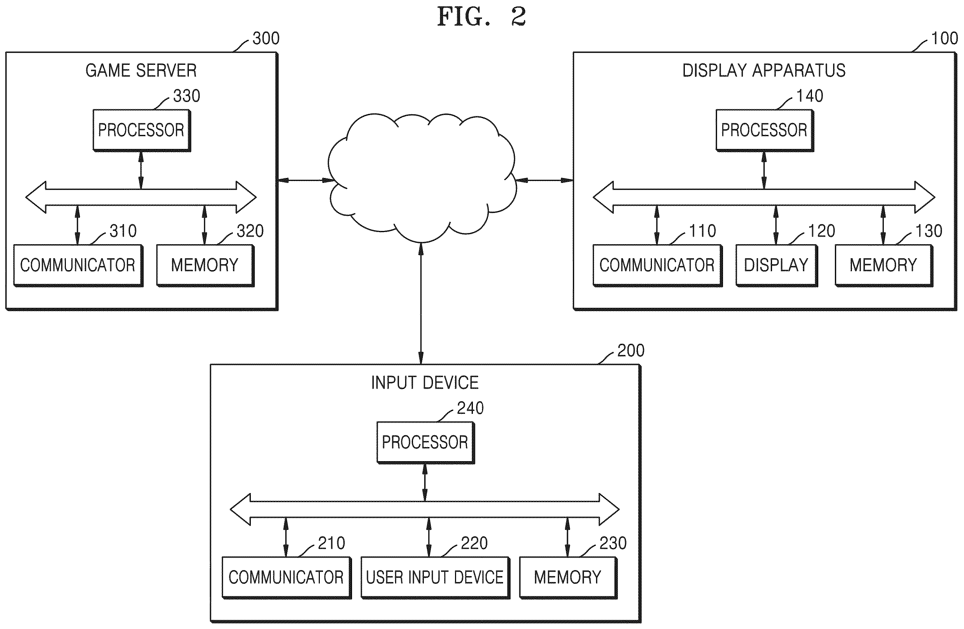

FIG. 2 illustrates an example of a system including a display apparatus, an input device, and a game server, according to an embodiment of the disclosure.

Referring to FIG. 2, the system may include the display apparatus 100, the input device 200, and the game server 300 connected to each other through a communication network.

The display apparatus 100 may be an apparatus capable of displaying images or data according to a request from a user, and may include a communicator 110, a display 120, a memory 130, and a processor 140.

The communicator 110 may include one or more modules that enable wireless communication between the display apparatus 100 and a wireless communication system or between the display apparatus 100 and a network in which other devices are located. According to an embodiment of the disclosure, the communicator 110 may communicate with the input device 200 according to short-range communication technology. The short-range communication technology may include, for example, Bluetooth communication, wireless-fidelity (Wi-Fi) communication, infrared communication, etc. According to an embodiment of the disclosure, the communicator 110 may communicate with the game server 300 according to the Internet protocol.

The display 120 may output an image or data processed by the display apparatus 100.

The memory 130 may store a program for processing and control of the processor 140 and may store data input to or output from the display apparatus 100. Also, the memory 130 may store data used for operations of the display apparatus 100.

The memory 130 may include at least one kind of storage medium, among a flash memory type, a hard disk type, a multimedia card micro type, card type memory (for example, Secure Digital (SD) memory or eXtreme Digital (XD) memory), random access memory (RAM), static random access memory (SRAM), read-only memory (ROM), electrically erasable programmable read-only memory (EEPROM), and programmable read-only memory (PROM), magnetic memory, a magnetic disk, or an optical disk.

The processor 140 may control overall operations of the display apparatus 100. For example, the processor 140 may execute one or more instructions stored in the memory 130 to perform functions of the display apparatus 100 described in the disclosure.

In an embodiment of the disclosure of the disclosure, the processor 140 may store one or more instructions in an internal memory included therein and execute one or more instructions stored in the internal memory to control operations of the display apparatus 100 to be performed. That is, the processor 140 may perform a specified operation by executing at least one instruction or program stored in the internal memory included therein or the memory 130.

According to an embodiment of the disclosure, the processor 140 may execute one or more instructions stored in the memory 130 to perform operations of the display apparatus 100 disclosed in the disclosure.

According to an embodiment of the disclosure, the processor 140 may execute one or more instructions stored in the memory 130 to receive, from an input device, an input instructing execution of a game launcher that provides one or more game applications.

According to an embodiment of the disclosure, the processor 140 may execute one or more instructions stored in the memory 130 to identify a type of the input device.

According to an embodiment of the disclosure, the processor 140 may execute one or more instructions stored in the memory 130 to transmit information about the identified type of the input device to a game server corresponding to the game launcher.

According to an embodiment of the disclosure, the processor 140 may execute one or more instructions stored in the memory 130 to receive information about one or more game applications that are controllable based on the identified type of the input device from the game server.

According to an embodiment of the disclosure, the processor 140 may execute one or more instructions stored in the memory 130 to configure and display a user interface screen provided by the game launcher based on the information about the one or more controllable game applications that are controllable based on the identified type of the input device.

According to an embodiment of the disclosure, the processor 140 may execute one or more instructions stored in the memory 130 to configure the user interface screen to include a game list including the information about the one or more game applications, and arrange the one or more game applications that are controllable based on the identified type of the input device such that the one or more game applications are distinguished from other game applications in the game list.

According to an embodiment of the disclosure, the processor 140 may execute one or more instructions stored in the memory 130 to receive an input for executing a game application from the input device, identify whether the game application is controllable based on the type of the input device, and execute the game application based on the game application being identified to be controllable based on the type of the input device or output a guide message based on the game application being identified not to be controllable based on the type of the input device.

According to an embodiment of the disclosure, the processor 140 may execute one or more instructions stored in the memory 130 to identify one or more input devices capable of controlling the game application, based on the game application being identified not to be controllable based on the type of the input device, and output the guide message including information about the one or more input devices capable of controlling the game application.

According to an embodiment of the disclosure, the processor 140 may execute one or more instructions stored in the memory 130 to identify an input device having a history of pairing with the display apparatus 100 from among the one or more input devices capable of controlling the game application, and display information indicating the history of pairing with respect to the input device having the history of pairing.

According to an embodiment of the disclosure, the processor 140 may execute one or more instructions stored in the memory 130 to transmit information about the type of the input device to the game server based on the game application being identified to be controllable based on the type of the input device, and receive a game control user interface changed to correspond to a user input interface configuration of the input device from the game server according to the transmission of the information about the type of the input device.

According to an embodiment of the disclosure, the processor 140 may execute one or more instructions stored in the memory 130 to receive information about the one or more game applications that are provided by the game server and information about one or more input devices capable of controlling each of the game applications from the game server, and provide a visual effect to one or more game application items displayed on the user interface screen by using the information about the one or more input devices capable of controlling each of the game applications.

According to an embodiment of the disclosure, the processor 140 may execute one or more instructions stored in the memory 130 to based on one of the game application items being focused on according to a user input, provide information about one or more game input devices capable of controlling a game application corresponding to the focused game application item, as a focus effect.

The display apparatus 100 may be any type of apparatus that includes a processor and a memory to perform functions. The display apparatus 100 may be a fixed or portable apparatus. For example, the display apparatus 100 may be an apparatus that includes a display to display image content, video content, game content, graphic content, etc. The display apparatus 100 may output or display images or content received from the game server 300. The display apparatus 100 may include various types of electronic devices including, for example, televisions (for example, network televisions (TVs), smart TVs, Internet TVs, web TVs, and internet protocol television (IPTVs)), computers (for example, desktops, laptops, and tablets), and various smart devices (for example, smartphones, cellular phones, game players, music players, video players, medical equipment, and home appliances), capable of receiving content and outputting content. The display apparatus 100 refers to as a display apparatus in view of receiving content and displaying content, and may also refer to as a content receiver, a sync device, an electronic device, a computing device, etc.

The block diagram of the display apparatus 100 shown in FIG. 2 may be a block diagram for an embodiment of the disclosure. Some of components included in the block diagram may be integrated into one component, another component may be added, or some of the components may be omitted, according to a specification of the display apparatus 100 that is actually implemented. For example, two or more components may be integrated into one component, or one component may be separated into two or more components. Also, functions performed in the individual blocks are provided to describe the embodiments, and detailed operations or devices for the functions do not limit the scope of rights of the disclosure.

Hereinafter, the input device 200 will be described.

The input device 200 may include a communicator 210, a user input device 220, a memory 230, and a processor 240. However, the input device 200 may be implemented with more components than those shown, and is not limited to the above-described example.

The communicator 210 may include one or more modules that enable wireless communication between the input device 200 and a wireless communication system or between the input device 200 and a network in which other devices are located. According to an embodiment of the disclosure, the communicator 210 may communicate with the display apparatus 100 according to short-range communication technology. The short-range communication technology may include, for example, Bluetooth communication, Wi-Fi communication, infrared communication, etc. According to an embodiment of the disclosure, the communicator 210 may communicate with the game server 300 according to the Internet protocol.

The user input device 220 may be any type of interface capable of receiving a user input. For example, the user input device 220 may include a control button arranged at a portion of the input device 200 and configured to receive a user's input, a touch-sensitive display configured to detect a touch input, a microphone configured to receive a voice input uttered from a user, a motion sensor configured to detect a motion of the input device 200, etc.

The memory 230 may store a program for processing and control of the processor 240, and may store data input to or output from the input device 200.

The memory 230 may include at least one type of storage medium among a flash memory type, a hard disk type, a multimedia card micro type, card type memory (for example, SD memory or XD memory), RAM, SRAM, ROM, EEPROM, and PROM, magnetic memory, a magnetic disk, or an optical disk.

The processor 240 may control overall operations of the input device 200. For example, the processor 240 may execute one or more instructions stored in the memory 230 to perform functions of the input device 200 as described in the disclosure.

In an embodiment of the disclosure of the disclosure, the processor 240 may store one or more instructions in an internal memory included therein and execute one or more instructions stored in the internal memory to control the above-described operations to be performed. That is, the processor 240 may perform a preset operation by executing at least one instruction or program stored in the internal memory included therein or the memory 130.

According to an embodiment of the disclosure, the processor 240 may execute one or more instructions stored in the memory 230 to perform a communication connection with the display apparatus 100 using short-range wireless communication technology. The short-range wireless communication technology may include Bluetooth communication, Wi-Fi direct, etc.

According to an embodiment of the disclosure, the processor 240 may execute one or more instructions stored in the memory 230 to transmit an input instructing execution of a game launcher to the display apparatus 100.

According to an embodiment of the disclosure, the processor 240 may execute one or more instructions stored in the memory 230 to transmit an input instructing execution of a game application to the display apparatus 100.

According to an embodiment of the disclosure, the processor 240 may execute one or more instructions stored in the memory 230 to transmit an input for controlling a game application to the display apparatus 100.

The input device 200 may be any type of apparatus that includes a processor and a memory to perform functions. The input device 200 may include various electronic devices, such as a remote controller, a game controller, a game pad, and a smartphone.

The block diagram of the input device 200 shown in FIG. 2 may be a block diagram for an embodiment of the disclosure. Some of components included in the block diagram may be integrated into one component, another component may be added, or some of the components may be omitted, according to a specification of the input device 200 that is actually implemented. For example, two or more components may be integrated into one component, or one component may be separated into two or more components. Also, functions performed in the individual blocks are provided to describe the embodiments, and detailed operations or devices for the functions do not limit the scope of rights of the disclosure.

Hereinafter, the game server 300 will be described.

The game server 300 may include a communicator 310, a memory 320, and a processor 330. However, the game server 300 may be implemented with more components than those shown, and is not limited to the above-described example. For example, the game server 300 may be equipped with a separate image processor for image processing of application images executed on the game server 300.

The communicator 310 may include one or more modules that enable wireless communication between the game server 300 and a wireless communication system or between the game server 300 and a network in which other devices are located. According to an embodiment of the disclosure, the communicator 310 may communicate with the display apparatus 100 according to the Internet protocol. According to an embodiment of the disclosure, the communicator 310 may communicate with the input device 200 according to the Internet protocol.

The memory 320 may store a program for processing and control of the processor 330, and may store data input to or output from the game server 300.

The memory 320 may include at least one type of storage medium among a flash memory type, a hard disk type, a multimedia card micro type, card type memory (for example, SD memory or XD memory), RAM, SRAM, ROM, EEPROM, and PROM, magnetic memory, a magnetic disk, or an optical disk.

The processor 330 may control overall operations of the game server 300. For example, the processor 330 may execute one or more instructions stored in the memory 320 to perform functions of the game server 300 as described in the disclosure.

In an embodiment of the disclosure of the disclosure, the processor 330 may store one or more instructions in an internal memory included therein and execute one or more instructions stored in the internal memory to control the above-described operations to be performed. That is, the processor 330 may perform a preset operation by executing at least one instruction or program stored in the internal memory included therein or the memory 320.

According to an embodiment of the disclosure, the processor 330 may execute one or more instructions stored in the memory 320 to provide, according to reception of an input instructing execution of a game launcher from the display apparatus 100, information about one or more game applications that are provided by the game server 300 to the display apparatus 100. The information about the one or more game applications may include information about one or more input devices capable of controlling each of the game applications.

According to an embodiment of the disclosure, the processor 330 may execute one or more instructions stored in the memory 320 to obtain, according to reception of information about a type of an input device together with an input indicating execution of a game launcher from the display apparatus 100, information about one or more game applications that are controllable based on the type of the input device among a plurality of game applications, and transmit the information about the one or more game applications to the display apparatus 100.

According to an embodiment of the disclosure, the processor 330 may execute one or more instructions stored in the memory 320 to start, according to reception of an input instructing execution of a game application from the display apparatus 100, execution of the game application, configure a game application execution user interface screen, and transmit the game application execution user interface screen to the display apparatus 100.

According to an embodiment of the disclosure, the processor 330 may execute one or more instructions stored in the memory 320 to control, according to reception of an input for controlling the game application from the display apparatus 100, the game application based on the input for controlling the game application, and provide a screen showing an execution result of the game application to the display apparatus 100.

The block diagram of the game server 300 shown in FIG. 2 may be a block diagram for an embodiment of the disclosure. Some of components included in the block diagram may be integrated into one component, another component may be added, or some of the components may be omitted, according to a specification of the game server 300 that is actually implemented. For example, two or more components may be integrated into one component, or one component may be separated into two or more components. Also, functions performed in the individual blocks are provided to describe the embodiments, and detailed operations or devices for the functions do not limit the scope of rights of the disclosure.

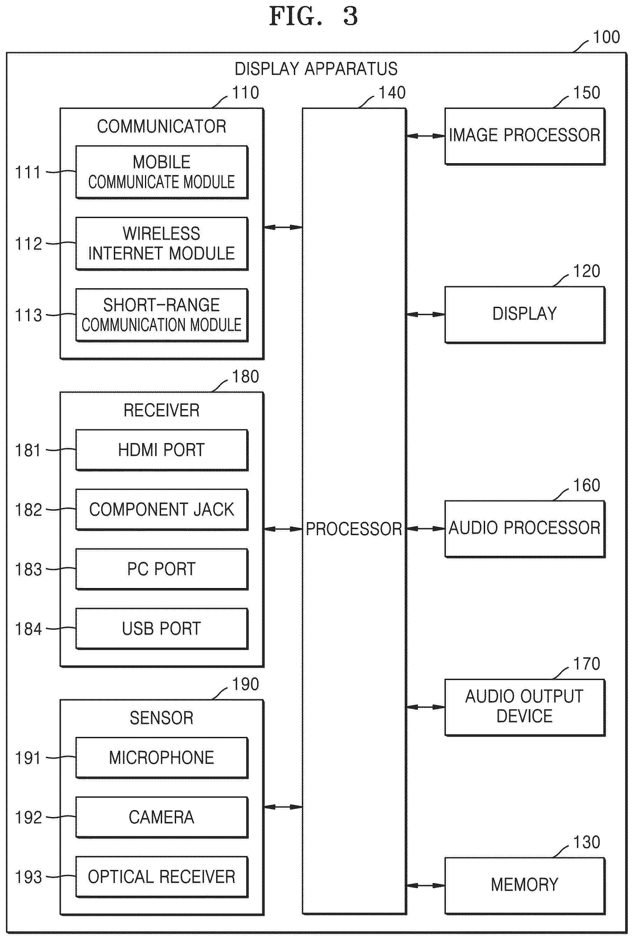

FIG. 3 is an example of a block diagram of a display apparatus according to an embodiment of the disclosure.

Referring to FIG. 3, the display apparatus 100 may include an image processor 150, an audio processor 160, an audio output device 170, a receiver 180, and a sensor 190, in addition to the communicator 110, the display 120, the memory 130, and the processor 140.

The communicator 110 may include one or more modules that enable wireless communication between the display apparatus 100 and a wireless communication system or between the display apparatus 100 and a network in which other devices are located. For example, the communicator 110 may include a mobile communication module 111, a wireless Internet module 112, and a short-range communication module 113.

The mobile communication module 111 may transmit/receive a wireless signal to/from at least one of a base station, an external terminal, or a server on a mobile communication network. The wireless signal may include various types of data based on transmission/reception of a voice call signal, a video call signal, or a text/multimedia message.

The wireless Internet module 112 refers to a module for wireless Internet access and may be built into or external to the display apparatus 100. Wireless Internet technology may include Wireless Local Area Network (WLAN) (Wi-Fi), Wireless Broadband (Wibro), World Interoperability for Microwave Access (Wimax), High Speed Downlink Packet Access (HSDPA), etc. The display apparatus 100 may establish a Wi-Fi Peer to Peer (P2P) connection with another device through the wireless Internet module 112.

The short-range communication module 113 refers to a module for short-range communication. Short-range communication technology may include Bluetooth, Bluetooth Low Energy (BLE), Radio Frequency Identification (RFID), Infrared Data Association (IrDA), Ultra Wideband (UWB), ZigBee, etc.

The display 120 may display an image signal received from the game server 300 on a screen.

The memory 130 may store programs related to operations of the display apparatus 100 and various data generated during the operations of the display apparatus 100.

The memory 130 may store at least one instruction. Also, the memory 130 may store at least one instruction that is executed by the processor 140. Also, the memory 130 may store at least one program that is executed by the processor 140. Also, the memory 130 may store an application for providing a preset service.

The memory 130 may include at least one kind of storage medium among a flash memory type, a hard disk type, a multimedia card micro type, card type memory (for example, SD memory or XD memory), RAM, SRAM, ROM, EEPROM, and PROM, magnetic memory, a magnetic disk, or an optical disk.

The processor 140 may control overall operations of the display apparatus 100. For example, the processor 140 may perform functions of the display apparatus 100 described in the disclosure by executing one or more instructions stored in the memory 130.

In an embodiment of the disclosure of the disclosure, the processor 140 may store one or more instructions in an internal memory included therein and execute one or more instructions stored in the internal memory to control operations of the display apparatus 100 to be performed. That is, the processor 140 may perform a preset operation by executing at least one instruction or program stored in the internal memory included therein or the memory 130.

The image processor 150 may process an image signal received from the receiver 180 or the communicator 110 and output the image signal to the display 120, under a control by the processor 140.

The image processor 150 may convert an audio signal received from the receiver 180 or the communicator 110 into an analog audio signal, and output the analog audio signal to the audio output device 170, under a control by the processor 140.

The audio output device 170 may output audio (for example, voice or sound) input through the communicator 110 or the receiver 180. Also, the audio output device 170 may output audio stored in the memory 130, under a control by the processor 140. The audio output device 170 may include at least one or a combination of a speaker, a headphone output terminal, or a Sony/Philips Digital Interface (S/PDIF) output terminal.

The receiver 180 may receive video (for example, moving images, etc.), audio (for example, voice, music, etc.), and additional information (for example, Electronic Program Guide (EPG), etc.) outside the display apparatus 100, under a control by the processor 140. The receiver 180 may include one or a combination of a High-Definition Multimedia Interface (HDMI) port 181, a component jack 182, a Personal Computer (PC) port 183, or a Universal Serial Bus (USB) port 184. In addition to the HDMI port 181, the receiver 180 may further include DisplayPort (DP), Thunderbolt, and Mobile High-Definition Link (MHL).

The sensor 190 may detect a user's voice, a user's image, or a user's interaction, and may include a microphone 191, a camera 192, and an optical receiver 193.

The microphone 191 may receive a voice uttered by a user. The microphone 191 may convert a received voice into an electrical signal and output the electrical signal to the processor 140. The user's voice may include, for example, a voice corresponding to a menu or function of the display apparatus 100.

The camera 192 may receive an image (for example, successive frames) corresponding to a user's motion including gestures within a camera recognition range. The processor 140 may select a menu displayed on the display apparatus 100 or perform a control corresponding to a result of motion recognition by using a recognition result of a received motion.

The optical receiver 193 may receive an optical signal (including a control signal) from an external controller. The optical receiver 193 may receive an optical signal corresponding to a user input (for example, touch, pressing, a touch gesture, a voice, or a motion) from the external controller. A control signal may be extracted from the received optical signal according to a control by the processor 140.

The processor 140 may control overall operations of the display apparatus 100 and signal flow between internal components of the display apparatus 100, and process data. Upon reception of a user input or satisfaction of a preset and stored condition, the processor 140 may execute an operating system (OS) and various applications stored in the memory 130.

The processor 140 may include a graphic processing unit for processing graphics corresponding to video. The graphic processing unit may generate a screen including various objects, such as icons, images, and text, by using a calculator and a rendering device. The calculator may calculate attribute values, such as coordinates at which the respective objects are to be displayed, shapes of the objects, sizes of the objects, and colors of the objects, according to a layout of the screen, based on a user interaction detected by a sensor. The rendering device may generate screens with various layouts including the objects based on the attribute values calculated by the calculator.

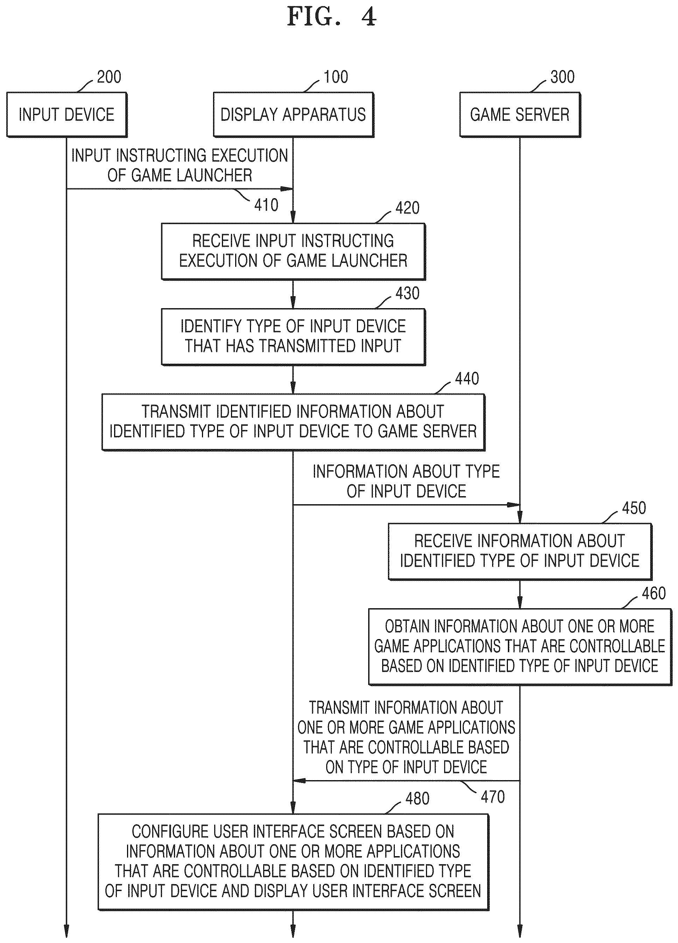

FIG. 4 is a flowchart illustrating an example of a method of operating a display apparatus, according to an embodiment of the disclosure.

Referring to FIG. 4, in operation 410, the input device 200 may transmit an input instructing execution of a game launcher to the display apparatus 100.

The game launcher may be a type of application that provides a user interface page for allowing a user to browse a plurality of game applications, search for his or her game application, and execute the game application. For example, the game launcher may be a gaming hub or a cloud gaming service application that collects and provides a plurality of game applications provided by a plurality of game operators, a game service application that provides a plurality of game applications provided by a game operator, etc.

According to an embodiment of the disclosure, the display apparatus 100 may provide a user interface including an item or menu corresponding to a game launcher, and according to a selection of the item or menu corresponding to the game launcher through the input device 200 by a user, the input device 200 may transmit an input instructing execution of the game launcher to the display apparatus 100.

The input device 200 which transmits the input instructing execution of the game launcher may have various types. For example, the input device 200 may include a remote controller of the display apparatus 100, a game controller or gamepad that is used for game play, or a mouse and keyboard. The remote controller may also have various types. The gamepad may also have various types manufactured by different game service providers.

In operation 420, the display apparatus 100 may receive the input instructing execution of the game launcher from the input device 200. The display apparatus 100 may receive the input instructing execution of the game launcher by using various communication protocols depending on a communication connection method of the input device 200. The various communication protocols may include a Bluetooth communication protocol, a USB communication protocol, a Wi-Fi communication protocol, an infrared communication protocol, etc.

In operation 430, the display apparatus 100 may identify a type of the input device 200that has transmitted the input instructing execution of the game launcher.

The display apparatus 100 may communicate with the input device 200 through various communication protocols, for example, a Bluetooth communication protocol, a USB communication protocol, a Wi-Fi communication protocol, or an infrared communication protocol, and while the display apparatus 100 establishes a communication connection to the input device 200 according to such a communication protocol, the display apparatus 100 may obtain identification information of the input device 200 which is an opposite party or information about a type of the input device 200.

According to an embodiment of the disclosure, the display apparatus 100 may identify the type of the input device 200 based on the obtained identification information of the input device 200 or the obtained information about the type of the input device 200.

In operation 440, the display apparatus 100 may transmit the identified information about the type of the input device 200 to the game server 300 corresponding to the game launcher.

In operation 450, the game server 300 may receive the information about the type of the input device 200 from the display apparatus 100.

In operation 460, the game server 300 may obtain information about one or more game applications that are controllable based on the type of the input device 200.

According to an embodiment of the disclosure, the game server 300 may have information about one or more input devices capable of controlling each of game applications that are provided by the game server 300. The game server 300 may use the information to obtain information about one or more game applications that are controllable based on the type of the input device 200 received from the display apparatus 100.

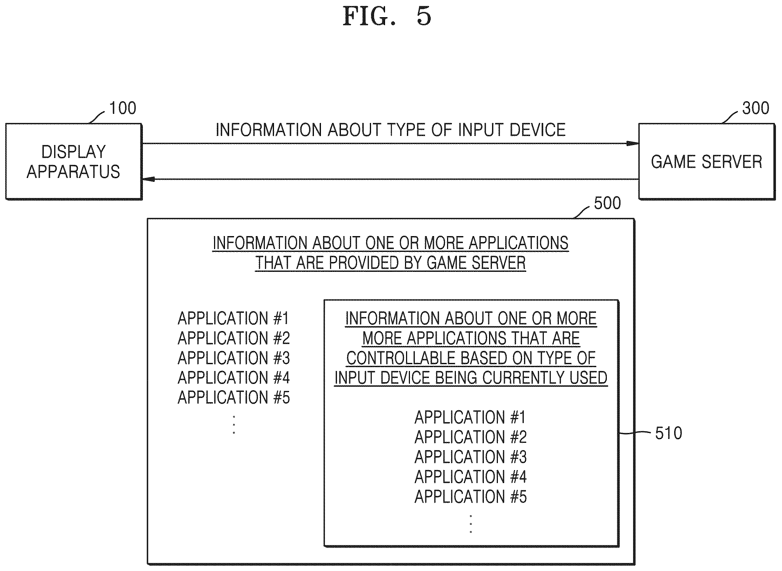

In operation 470, the game server 300 may transmit the information about the one or more game applications that are controllable based on the type of the input device 200 to the display apparatus 100. The information about the one or more game applications, which is transmitted from the game server 300 to the display apparatus 100, will be described with reference to FIG. 5.

FIG. 5 is a reference view for describing operation of providing information about applications from a game server to a display apparatus, according to an embodiment of the disclosure.

Referring to FIG. 5, the display apparatus 100 may transmit information about the type of the input device 200 to the game server 300, and the game server 300 may obtain information about one or more applications that are executable and controllable based on the type of the input device 200.

The game server 300 may transmit information 500 about one or more applications that are provided by the game server 300 to the display apparatus 100. At this time, the game server 300 may also transmit information 510 about one or more applications that are controllable based on the type of the input device being currently used, to the display apparatus 100, according to embodiments.

In operation 480, the display apparatus 100 may configure a user interface screen based on the information 510 about the one or more applications that are controllable based on the type of the input device, and display the user interface screen.

According to an embodiment of the disclosure, the display apparatus 100 may display a user interface screen provided by the game launcher in response to the input instructing execution of the game launcher, received in operation 420, wherein the user interface screen may include information about one or more applications that may be provided by the game server 300. At this time, the display apparatus 100 may configure the user interface screen based on the information about the one or more applications that are controllable based on the type of the input device, the information received from the game server 300, and display the user interface screen. For example, the input device 200 may be a remote controller. In this case, the display apparatus 100 may receive information about one or more game applications that are controllable by the remote controller from the game server 300, configure a user interface screen based on the information about the one or more game applications that are controllable by the remote controller, and display the user interface screen.

According to an embodiment of the disclosure, the display apparatus 100 may configure the user interface screen such that the information about the one or more game applications that are controllable based on the type of the input device is distinguished from information about other game applications, and display the user interface screen.

According to an embodiment of the disclosure, the display apparatus 100 may configure the user interface screen such that the information about the one or more game applications that are controllable based on the type of the input device appears in preference to the information about the other game applications, and display the user interface screen.

According to an embodiment of the disclosure, in a user interface screen configured as segmented pages, that is, configured to load, according to pressing of a page number, another page, the display apparatus 100 may display, on a first page, the information about the one or more game applications that are controllable based on the type of the input device being currently used.

According to an embodiment of the disclosure, in a user interface screen configured as a page that is expanded by a scroll, the display apparatus 100 may display, on an area initially displayed, the information about the one or more game applications that are controllable based on the type of the input device being currently used.

In this way, by displaying information about one or more game applications that are controllable based on the input device 200 being currently used by a user, the user may be allowed to easily select a game application that is controllable by the input device 200 being currently used by himself or herself. By giving the user little chance of selecting a game application that may not be executed by the input device being used by himself or herself or preventing the user from selecting such a game application, the user may be prevented from wasting time by a useless operation.

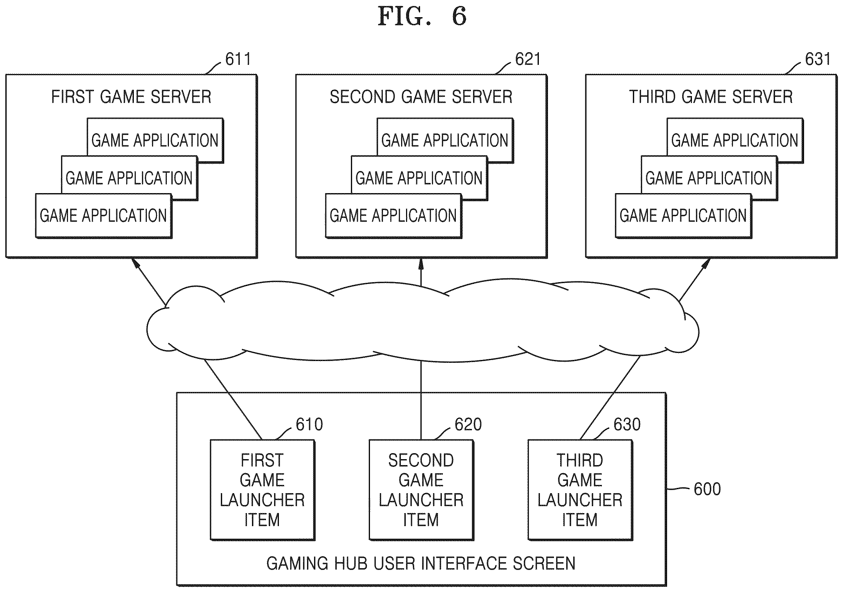

FIG. 6 illustrates an example of a gaming hub user interface screen according to an embodiment of the disclosure.

A gaming hub may be a launcher application that enables a user using the display apparatus 100 to more easily and conveniently access and use game content by using the display apparatus 100. A game launcher may be an application that allows a connection to a game server providing game applications and browsing of the game applications provided by the game server. A game launcher item may be an item provided to instruct execution of the game launcher. The game launcher item may include a thumbnail image representing a game server corresponding to the game launcher, and a uniform resource locator (URL) for connecting to the corresponding game server may be connected to the game launcher item. Accordingly, upon reception of a selection input from a user, the display apparatus 100 may perform an operation of connecting to the corresponding game server by using the connected URL.

Referring to FIG. 6, according to an embodiment of the disclosure, a gaming hub user interface screen 600 may include one or more game launcher items, for example, a first game launcher item 610, a second game launcher item 620, and a third game launcher item 630. Upon reception of a user input of selecting the first game launcher item 610, the display apparatus 100 may connect to a first game server 611 and display a server home user interface provided by the first game server 611. Upon reception of a user input of selecting the second game launcher item 620, the display apparatus 100 may connect to a second game server 621 and display a server home user interface provided by the second game server 621. Upon reception of a user input of selecting the third game launcher item 630, the display apparatus 100 may connect to a third game server 631 and display a server home user interface provided by the third game server 631.

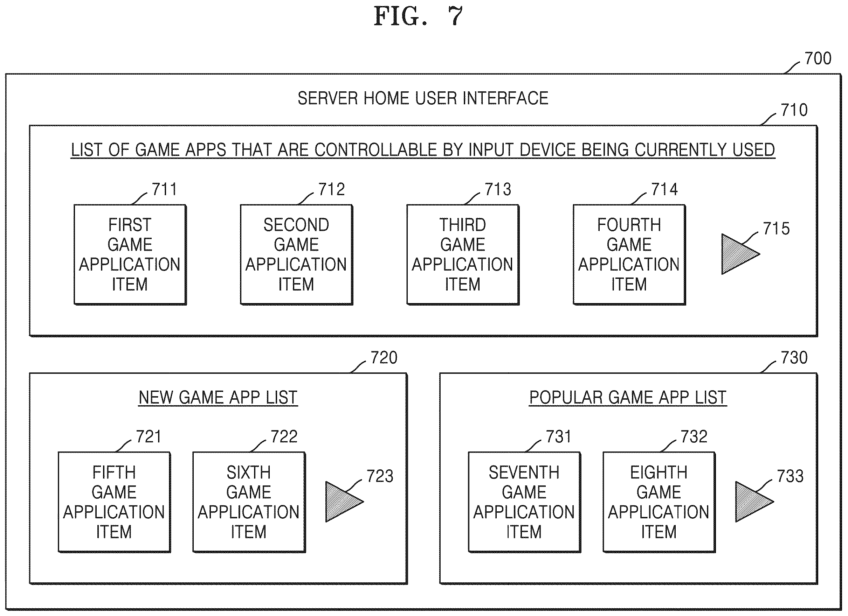

For example, according to a selection of the first game launcher item 610 through the input device 200 by the user, the display apparatus 100 may receive an input representing that the first game launcher item 610 has been selected from the input device 200. Then, the display apparatus 100 may identify a type of the input device 200 and transmit information about the type of the input device 200 to the first game server 611 corresponding to the first game launcher. Then, the first game server 611 may transmit information about one or more game applications that are controllable based on the type of the input device 200 to the display apparatus 100. The first game server 611 may also transmit information about other game applications that may be provided by the first game server 611, that is, game applications that are controllable based on other types of the input device 200, to the display apparatus 100. FIG. 7 illustrates an example of a server home user interface corresponding to a first game server that may be displayed according to a selection of, for example, the first game launcher item 610.

FIG. 7 illustrates an example of a server home user interface according to an embodiment of the disclosure.

Referring to FIG. 7, a server home user interface 700 may include a list 710 of games that are executable and controllable by an input device being currently used, and may selectively include a new game app list 710 and a popular game app list 730.

The list 710 of the games that are executable and controllable by the input device being currently used may include a list of one or more game applications that are controllable by an input device being currently used by a user, that is, an input device used to select a game launcher item. The list 710 of the games that are executable by the input device being currently used may include a first game application item 711, a second game application item 712, a third game application item 713, a fourth game application item 714, and a scroll item 715. According to a selection of the first game application item 711 through the input device 200, the display apparatus 100 may transmit an instruction for executing the first game application to the first game server 611, receive a resultant screen according to execution of the first game application from the first game server 611, and display the screen. According to a selection of the scroll item 715 through the input device 200, the display apparatus 100 may further display game applications that are controllable by the input device being currently used.

The new game app list 720 may include a list of one or more recently released game applications. One or more game applications included in the new game app list 720 may be listed regardless of whether or not the game applications are controllable by the input device being currently used. Accordingly, the new game app list 720 may include all of game applications that are controllable by the input device being currently used and game applications that are not controllable by the input device being currently used. The new game app list 720 may include a fifth game application item 721, a sixth game application item 722, and a scroll item 723.

The popular game app list 730 may include a list of one or more game applications with a high number of views or sales. One or more game applications included in the popular game app list 730 may be listed regardless of whether or not the game applications are controllable by the input device being currently used. Accordingly, the popular game app list 730 may include all of game applications that are controllable by the input device being currently used and game applications that are not controllable by the input device being currently used. The popular game app list 730 may include a seventh game application item 731, an eighth game application item 732, and a scroll item 733.

As such, while the server home user interface 700 is displayed, the user may select one from among the game application items included in the list 710 of games that are controllable by the input device being currently used, and execute the selected game application item, through the input device 200. In this case, the display apparatus 100 may perform a control of immediately executing a game application corresponding to the selected game application item. The user may select one from among the game application items included in the new game app list 720 or the popular game app list 730 and execute the selected game application item, through the input device being currently used. In this case, the display apparatus 100 may perform a control of immediately executing a game application corresponding to the selected game application item or may fail to execute the game application in a case in which the game application does not support the input device being currently used.

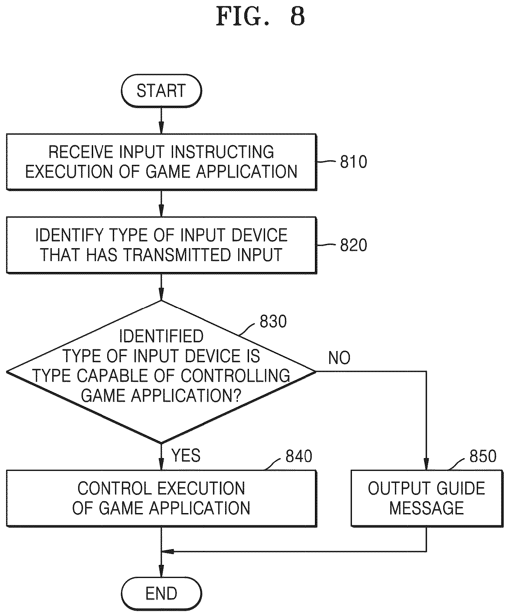

FIG. 8 is a flowchart illustrating an example of a method of operating a display apparatus, according to an embodiment of the disclosure.

Referring to FIG. 8, in operation 810, the display apparatus 100 may receive an input instructing execution of a game application from the input device 200.

For example, a user may perform an operation of selecting the first game application item 711 included in the list 710 or the seventh game application item 731 included in the popular game app list 730 in the server home user interface 700 as shown in FIG. 7, through the input device 200. An input for selecting a game application item may be an input instructing execution of a game application corresponding to the game application item. Accordingly, the display apparatus 100 may receive an input instructing execution of a game application from the input device 200.

In operation 820, the display apparatus 100 may identify a type of the input device 200 that has transmitted the input instructing execution of the game application.

The display apparatus 100 may communicate with the input device 200 by using various communication protocols, such as, for example, Bluetooth communication protocol, USB communication protocol, Wi-Fi communication protocol, and infrared communication protocol. Upon establishment of a communication connection according to one of the communication protocols, the display apparatus 100 may obtain identification information of the input device 200 which is an opposite party or information about a type of the input device 200.

According to an embodiment of the disclosure, the display apparatus 100 may identify a type of the input device 200 based on the obtained identification information of the input device 200 or the obtained information about the type of the input device 200.

In operation 830, the display apparatus 100 may identify whether the identified type of the input device 200 is a type capable of controlling the selected game application.

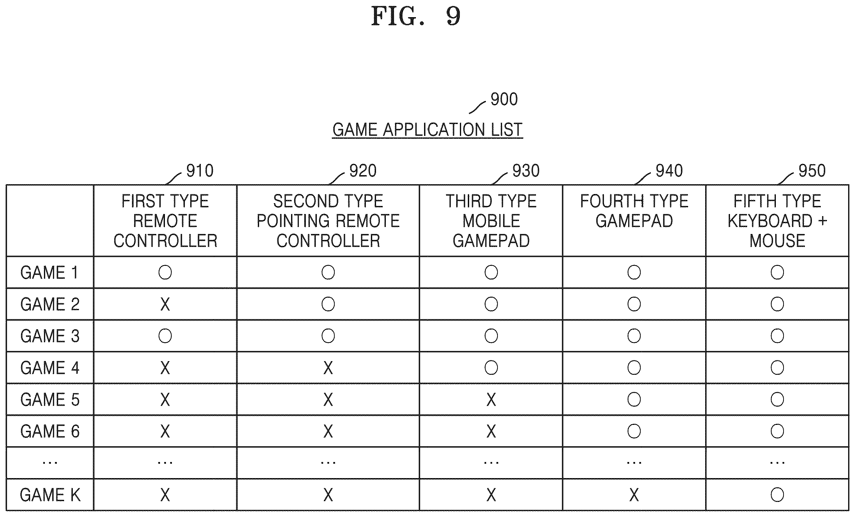

According to an embodiment of the disclosure, the display apparatus 100 may receive information about types of input devices capable of respectively controlling one or more game applications that are provided by the game server 300, from the game server 300. For example, the information about the types of input devices capable of respectively controlling the game applications will be described with reference to FIG. 9.

FIG. 9 illustrates an example of information about types of input devices capable of controlling game applications, according to an embodiment of the disclosure.

Referring to FIG. 9, the display apparatus 100 may receive a game application list 900 including information of types of input devices capable of respectively controlling one or more game applications that are provided by the game server 300, from the game server 300.

In the game application list 900, a plurality of game applications may be mapped to information about types of one or more input devices that may be used to control each of the game applications. Game 1 is shown to be controllable by all input device types of remote controller 910, pointing remote controller 920, mobile gamepad 930, gamepad 940, and keyboard and mouse 950. Game 2 is shown to be controllable by the remaining input device types of the pointing remote controller 920, the mobile gamepad 930, the gamepad 940, and the keyboard and mouse 950, except for the remote controller 910. Game K is shown to be controllable only by a fifth type input device, that is, the keyboard and mouse 950.

Returning to operation 830 of FIG. 8, the display apparatus 100 may identify whether the identified type of the input device being currently used is a type capable of executing and controlling the game application, with reference to the game application list 900 received from the game server 300. For example, the input device being currently used may be a remote controller, and the user may request execution of Game 1. In this case, the display apparatus 100 may identify that the type of the input device being currently used is a type capable of controlling the game application, with reference to the game application list 900. For example, the input device being currently used may be a remote controller, and the user may request execution of Game 2. In this case, the display apparatus 100 may identify that the type of the input device being currently used is a type incapable of controlling the game application, with reference to the game application list 900.

According to an embodiment of the disclosure, the display apparatus 100 may identify whether the type of the input device being currently used is capable of controlling the game application, with reference to metadata of game applications. The metadata of game applications may include information about types of input devices capable of controlling the game applications.

According to the identified result by the display apparatus 100 that the type of the input device being currently used is a type capable of controlling the game application in operation 830, the process may proceed to operation 840. Also, according to the identified result by the display apparatus 100 that the type of the input device being currently used is not a type capable of controlling the game application in operation 830, the process may proceed to operation 850.

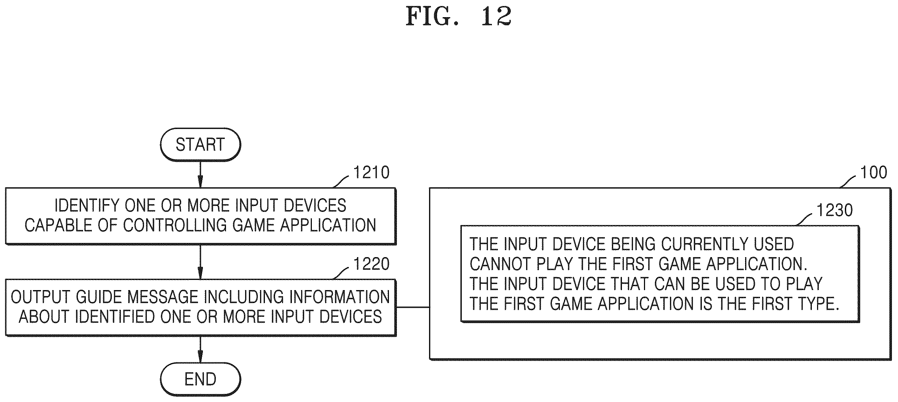

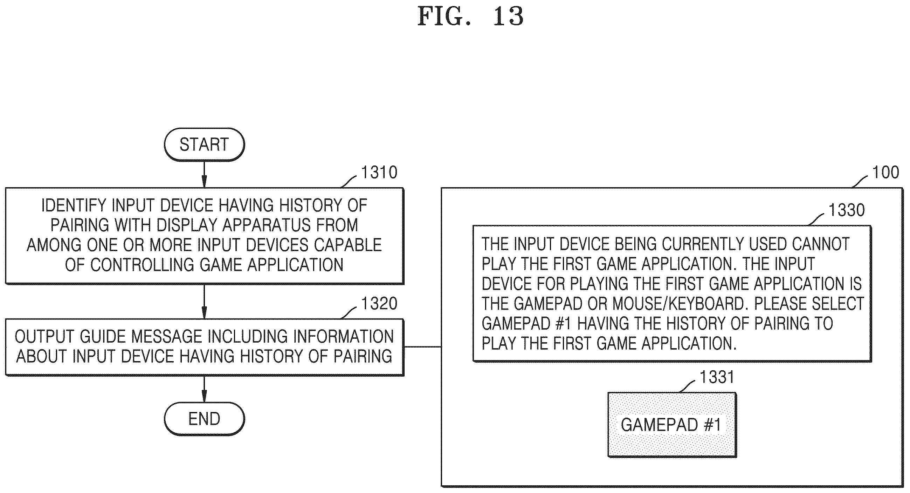

In operation 850, the display apparatus 100 may output a guide message according to the identified result that the type of the input device being currently used is not a type capable of controlling the game application. The guide message may include content indicating that the selected game application is incapable of being executed by the input device being currently used or content informing a type of an input device capable of controlling the selected game application. The guide message may enable the user to quickly change the input device without any additional operation, thereby reducing a time that may be wasted by the user's useless additional operation. Details of operation 850 will be described with reference to FIGS. 12 and 13.

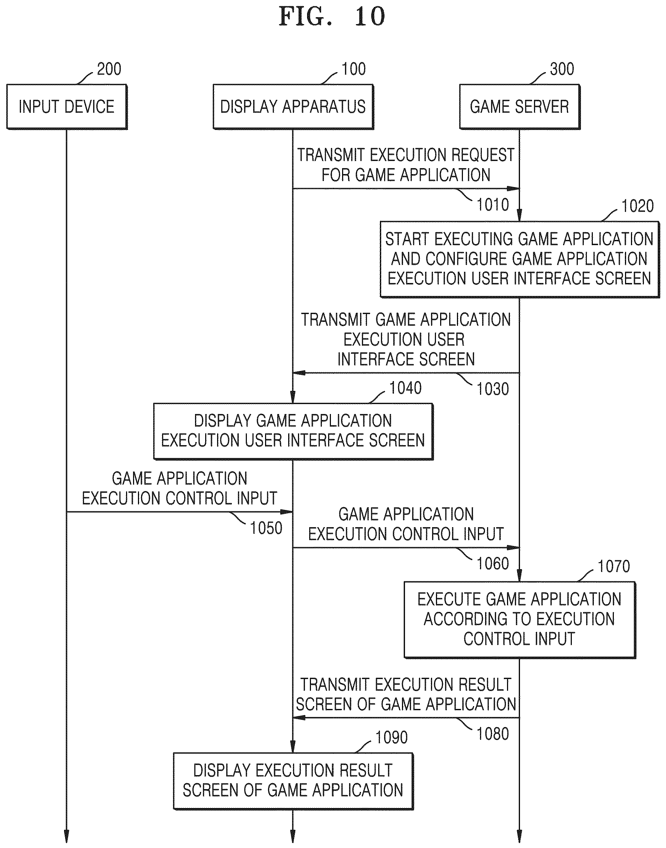

In operation 840, the display apparatus 100 may control execution of the game application because the type of the input device being currently used is a type capable of executing and controlling the game application. For example, the display apparatus 100 may transmit an execution request for the game application requested to be executed by the user, to the game server 300, and thereby control the game server 300 to execute the game application. Operation 840 of controlling execution of the game application will be described in detail with reference to FIG. 10.

FIG. 10 illustrates an example of a flowchart of a game application execution control operation according to an embodiment of the disclosure.

Referring to FIG. 10, in operation 1010, the display apparatus 100 may transmit an execution request for a game application selected by a user to the game server 300.

In operation 1020, the game server 300 may start executing the game application in response to the execution request for the game application from the display apparatus 100, and obtain a game application execution user interface screen.

In operation 1030, the game server 300 may transmit the game application execution user interface screen to the display apparatus 100.

In operation 1040, the display apparatus 100 may display the game application execution user interface screen.

In operation 1050, the user may transmit an input for controlling the game application to the display apparatus 100 through the input device 200 while seeing the game application execution user interface screen displayed on the display apparatus 100.

In operation 1060, the display apparatus 100 may transmit the input for controlling the game application, received from the input device 200, to the game server 300.

In operation 1070, the game server 300 may execute the game application according to the input received from the display apparatus 100. Then, the game server 300 may obtain an execution result screen according to execution of the game application.

In operation 1080, the game server 30 may transmit the execution result screen of the game application to the display apparatus 100.

In operation 1090, the display apparatus 100 may receive the execution result screen of the game application from the game server 300, and display the execution result screen of the game application.

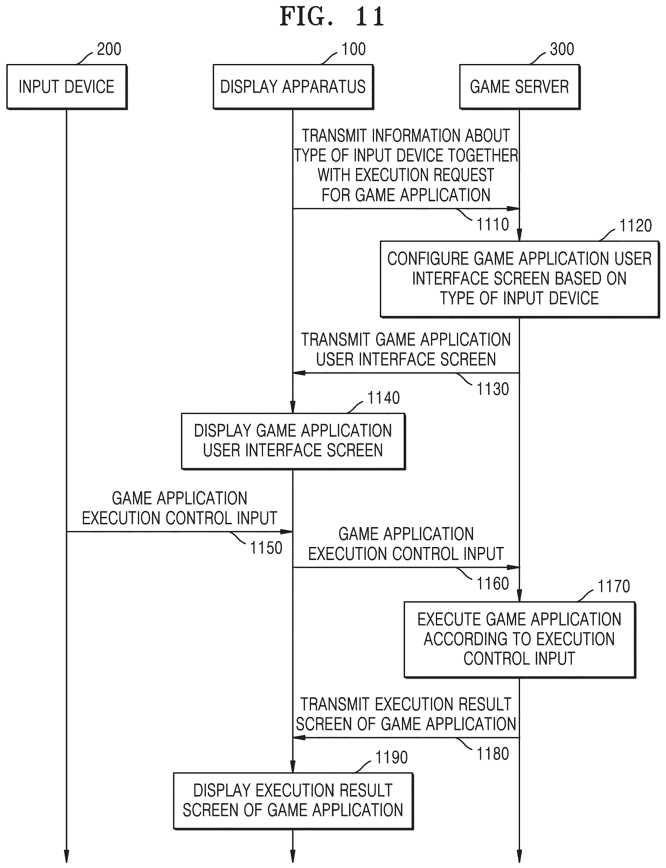

The display apparatus 100 may transmit information about a type of an input device, together with the execution request for the game application, to the game server 300 to configure a user interface screen of the game application to be conveniently controlled based on the type of the input device. This example will be described with reference to FIG. 11.

FIG. 11 illustrates an example of a flowchart of a method of operating a display apparatus, according to an embodiment of the disclosure. The method of FIG. 11 may be the same as that of FIG. 10, except for transmitting information about a type of an input device, together with an execution request for a game application, to the game server 300 and receiving, from the game server 300, a game application user interface screen changed and configured based on the type of the input device.

Referring to FIG. 11, in operation 1110, the display apparatus 100 may transmit information about a type of an input device, together with an execution request for a game application selected by a user, to the game server 300.

In operation 1120, the game server 300 may start executing the game application in response to the execution request for the game application from the display apparatus 100, and obtain a game execution start screen. Then, the game server 300 may change a configuration of the game execution start screen, based on the information about the type of the input device, received from the display apparatus 100. That is, the game server 300 may configure a game application user interface screen based on the type of the input device by changing a configuration of a game execution user interface screen for the user to more easily make inputs through the type of the input device or by omitting a menu(s) or item(s) disallowing inputs through the type of the input device while leaving a menu(s) or item(s) allowing inputs through the type of the input device. For example, the input device may be a remote controller. In this case, the game server 300 may configure a game application user interface screen by omitting a menu or item requiring inputs through a jog dial.

In operation 1130, the game server 300 may transmit the game application user interface screen corrected based on the input device, to the display apparatus 100.

In operation 1140, the display apparatus 100 may display the game application user interface screen.

The following operations 1150 to 1190 may be the same as operations 1050 to 1090 of FIG. 10, and accordingly, further descriptions thereof will be omitted.

In operation 830 of FIG. 8, the display apparatus 100 may identify that the type of the input device being currently used is not a type capable of controlling the game application. In this case, the display apparatus 100 may output a guide message for informing the user that the type of the input device being currently used is not a type capable of controlling the game application. A method of outputting a guide message will be described with reference to FIGS. 12 and 13.

FIG. 12 is a flowchart illustrating an example of a method of operating a display apparatus, according to an embodiment of the disclosure.

Referring to FIG. 12, the display apparatus 100 may identify one or more input devices capable of executing and controlling a game application selected by a user.

According to an embodiment of the disclosure, the display apparatus 100 may receive the game application list 900 in which types of input devices for control are mapped, from the game server 300, as shown in FIG. 9, and the display apparatus 100 may identify one or more input devices capable of controlling the game application selected by the user with reference to the game application list 900, in operation 1210. For example, the game application selected by the user may be Game 6. In this case, the display apparatus 100 may identify gamepad that is a fourth type of input device and keyboard/mouse that is a fifth type of input device, as one or more input devices capable of controlling Game 6.

In operation 1220, the display apparatus 100 may output a guide message including information about the identified one or more input devices. For example, the display apparatus 100 may output a guide message 1230 <The input device being currently used cannot play the first game application. The input device that can be used to play the first game application is the gamepad or keyboard/mouse>.

FIG. 13 is a flowchart illustrating an example of a method of operating a display apparatus, according to an embodiment of the disclosure.

Referring to FIG. 13, in operation 1310, the display apparatus 13 may identify one or more input devices capable of controlling a game application selected by a user, and further identify an input device having a history of pairing with the display apparatus 100 from among the identified one or more input devices.

Accordingly, the display apparatus 100 may receive the game application list 900 in which types of input devices for control are mapped, from the game server 300, as shown in FIG. 9, and the display apparatus 100 may identify one or more input devices capable of controlling the game application selected by the user with reference to the game application list 900. For example, the game application selected by the user may be Game 6. In this case, the display apparatus 100 may identify gamepad that is the fourth type of input device and keyboard/mouse that is the fifth type of input device, as one or more input devices capable of controlling Game 6.

Then, the display apparatus 100 may also further search for an input device having a history of pairing with the display apparatus 100 from among the identified one or more input devices. To this end, the display apparatus 100 may store and maintain a paired input device list listing input devices that have been paired with the display apparatus 100. That is, the display apparatus 100 may identify types of the one or more input devices capable of controlling the selected game application and search for the types of input devices in the paired input device list. For example, the game application selected by the user may be Game 6. In this case, the display apparatus 100 may identify gamepad that is the fourth type of input device and keyboard/mouse that is the fifth type of input device, as one or more input devices capable of controlling Game 6. Also, the display apparatus 100 may find gamepad #1 in the paired input device list, and in this case, the display apparatus 100 may output a guide message for inducing a selection of the gamepad #1.

In operation 1320, the display apparatus 100 may output a guide message including information about an input device having a history of pairing with the display apparatus 100. For example, the display apparatus 100 may output an item 1331 of Gamepad #1, together with a guide message < The input device being currently used cannot play the first game application. The input device for playing the first game application is the gamepad or mouse/keyboard. Please select Gamepad #1 to play the first game application>. According to reception of an input of selecting the item 1331 of Gamepad #1, the display apparatus 100 may perform a communication connection operation based on pairing information of Gamepad #1.

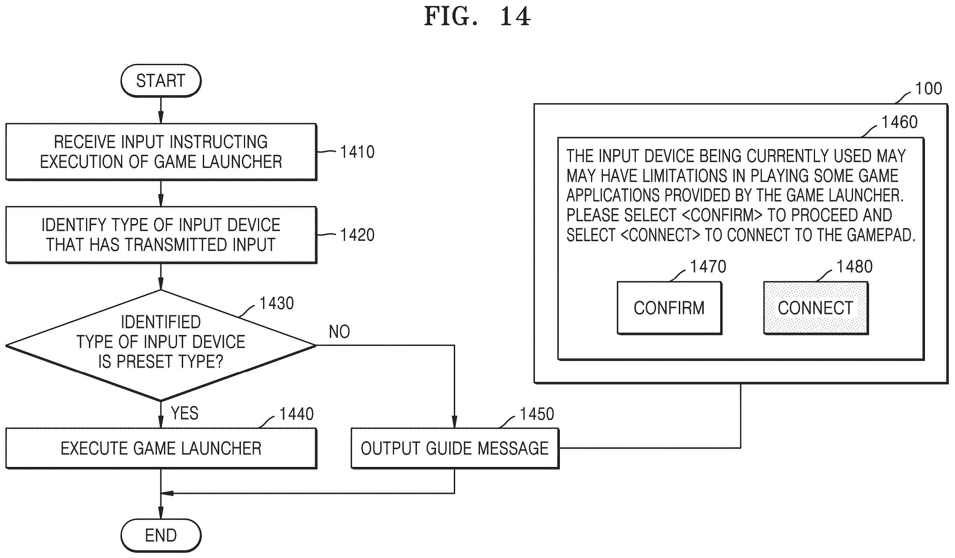

FIG. 14 is a flowchart illustrating an example of a method of operating a display apparatus, according to an embodiment of the disclosure.

Referring to FIG. 14, in operation 1410, the display apparatus 100 may receive an input instructing execution of a game launcher such as, for example, a gaming hub from the input device 200.

For example, a user may make an input of selecting the first game launcher item 610 in the gaming hub user interface screen 600 as shown in FIG. 6 by using the input device 200. The input of selecting the first game launcher item 610 may be an input instructing execution of the first game launcher corresponding to the first game launcher item. Accordingly, the display apparatus 100 may receive the input instructing execution of the game launcher from the input device 200.

In operation 1420, the display apparatus 100 may identify a type of the input device 200 that has transmitted the input instructing execution of the game launcher.

The display apparatus 100 may communicate with the input device 200 by using various communication protocols, such as, for example, Bluetooth communication protocol, USB communication protocol, Wi-Fi communication protocol, and infrared communication protocol. Upon establishment of a communication connection according to one of the communication protocols, the display apparatus 100 may obtain identification information of the input device 200 which is an opposite party or information about a type of the input device 200.

According to an embodiment of the disclosure, the display apparatus 100 may identify the type of the input device 200 based on the obtained identification information of the input device 200 or the obtained information about the type of the input device 200.

In operation 1430, the display apparatus 100 may identify whether the identified type of the input device 200 is a preset type. The preset type may be a type of an input device suitable for controlling one or more game applications provided by the game launcher requested to be executed. The game launcher may provide one or more game applications, and the one or more game applications may be controlled by the same type of input devices or different types of input devices. For example, the first game launcher may provide game applications that are executable and controllable only by gamepads. Accordingly, a preset type corresponding to the first game launcher may be gamepad. According to embodiments, for example, the second game launcher may provide a majority of game applications that are controllable by gamepads and some game applications that are controllable by remote controllers. Accordingly, because the second game launcher requires gamepads in a majority of cases although the second game launcher requires remote controllers in some cases, a preset type corresponding to the second game launcher may be gamepad.

The preset type may be, for example, a type designated to correspond to each game launcher. The preset type may be, for example, the same type designated to correspond to all game launchers. The preset type may be, for example, different types designated to correspond to respective game launchers. For example, in correspondence to the first game launcher, gamepad may be designated as a type of an input device.

According to an embodiment of the disclosure, a type of an input device designated to correspond to the game launcher may be gamepad, and in this case, the display apparatus 100 may identify whether the identified type of the input device is gamepad.

In operation 1430, the display apparatus 100 may identify that the type of the input device being currently used is the preset type, and in this case, the process may proceed to operation 1440. According to embodiments, the display apparatus 100 may identify that the type of the input device being currently used is not the preset type, and in this case, the process may proceed to operation 1450.

In operation 1450, the display apparatus 100 may output a guide message according to the identification that the type of the input device being currently used is not the preset type. The guide message may include content indicating that at least some game applications included in the game launcher may be not controlled by the input device being currently used or content informing a type of an input device that is usable for the game launcher. The guide message may enable the user to quickly change the input device without any additional operation, thereby reducing a time that may be wasted by the user's useless additional operation.

For example, the display apparatus 100 may output a guide message 1460.

The guide message 1460 may provide a confirm item 1470 and a connect item 1480 together with a message <The input device being currently used may have limitations in playing some game applications provided by the game launcher. Please select <Confirm> to proceed and select <Connect> to connect to the gamepad>. According to the user's input of selecting the confirm item 1470, the display apparatus 100 may perform an operation of executing the game launcher, and according to the user's input of selecting the connect item 1480, the display apparatus 100 may display a user interface screen for connecting to the gamepad.

In operation 1440, the display apparatus 100 may control the game launcher to be executed because the type of the input device being currently used is the preset type. For example, the display apparatus 100 may transmit an execution request for the game launcher requested to be executed by the user to the game server 300, receive information about one or more applications that are provided by the game server 300 from the game server 300, configure a user interface screen corresponding to the game launcher based on the received information about the one or more applications, and display the user interface screen.

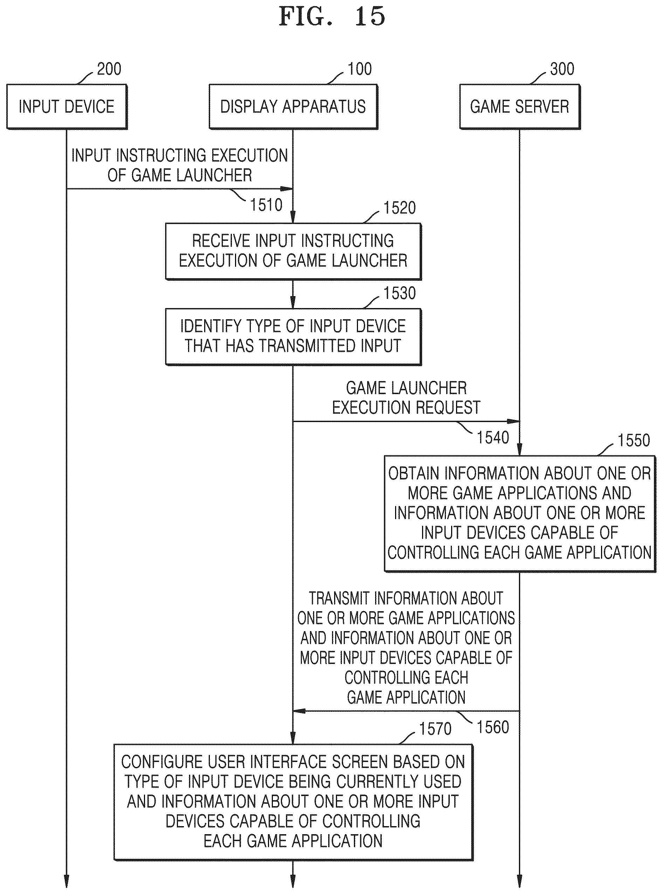

FIG. 15 is a flowchart illustrating an example of a method of operating a display apparatus, according to an embodiment of the disclosure.

Operations 1510 to 1550 among operations of FIG. 15 are the same as operations 410 to 450 of FIG. 4, and accordingly, operations 1510 to 1550 will be briefly described.

Referring to FIG. 15, in operation 1510, the input device 200 may transmit an input instructing execution of a game launcher to the display apparatus 100.

In operation 1520, the display apparatus 100 may receive the input instructing execution of the game launcher from the input device 200. The display apparatus 100 may receive the input instructing execution of the game launcher by using various communication protocols according to a communication connection method of the input device 200. The various communication protocols may include a Bluetooth communication protocol, a USB communication protocol, a Wi-Fi communication protocol, an infrared communication protocol, etc.

In operation 1530, the display apparatus 100 may identify a type of the input device 200 that has transmitted the input instructing execution of the game launcher.

The display apparatus 100 may communicate with the input device 200 by using various communication protocols, such as, for example, Bluetooth communication protocol, USB communication protocol, Wi-Fi communication protocol, and infrared communication protocol. Upon establishment of a communication connection according to one of the communication protocols, the display apparatus 100 may obtain identification information of the input device 200 which is an opposite party or information about a type of the input device 200.

In operation 1540, the display apparatus 100 may transmit a game launcher execution request to the game server 300 corresponding to the game launcher.

In operation 1550, the game server 300 may obtain information about one or more game applications, and information about one or more input devices capable of controlling each game application.

According to an embodiment of the disclosure, the game server 300 may include information about one or more input devices capable of controlling each game application with respect to game applications that are provided by the game server 300.

In operation 1560, the game server 300 may transmit the information about the one or more game applications and the information about the one or more input devices capable of controlling each game application, to the display apparatus 100. For example, the information about the one or more input devices capable of controlling each game application may include the game application list 900 shown in FIG. 9.

In operation 1570, the display apparatus 100 may provide a visual effect to one or more game application items displayed on a user interface screen, based on the type of the input device being currently used, the information about the one or more game applications, and the information about the one or more input devices capable of controlling each game application. In FIG. 4, the display apparatus 100 may transmit information about an input device being currently used to the game server 300 to cause the game server 300 to identify one or more game applications that are controllable based on a type of the input device. In contrast, in FIG. 14, the display apparatus 100 may receive information about one or more input devices capable of controlling each game application from the game server 300, and the display apparatus 100 may configure a user interface screen based on an identified type of an input device being currently used and the information about the one or more input devices capable of controlling each game application, received from the game server 300.

According to an embodiment of the disclosure, the display apparatus 100 may identify one or more input devices for control based on the type of the input device being currently used and display information about the one or more input devices, based on the identified information of the input device being currently used and the information about the one or more input devices for controlling each game application, received from the game server 300. For example, the display apparatus 100 may display the list 710 of game applications that are controllable by the input device being currently used, as shown in FIG. 7.

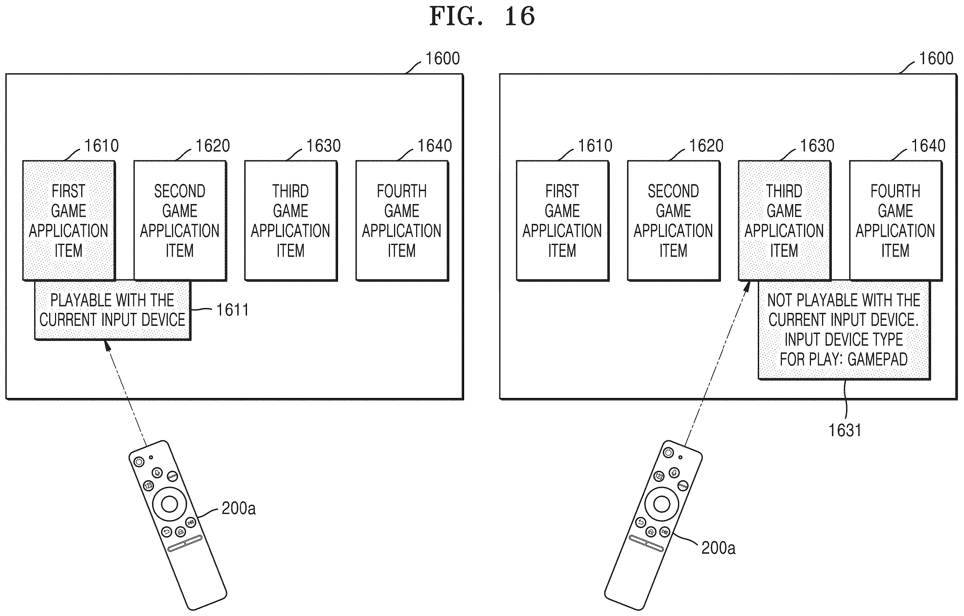

According to an embodiment of the disclosure, the display apparatus 100 may provide, based on each game application item being focused on, information about an input device capable of controlling the corresponding game application, as a focus effect, based on the identified type of the input device being currently used and the information about the one or more input devices for controlling each game application, received from the game server 300. The display apparatus 100 may identify one or more input devices capable of controlling the corresponding game application based on the type of the input device being currently used, and display information about the one or more input devices. This example will be described with reference to FIG. 16.

FIG. 16 is a reference view for describing a method of providing information about an input device capable of controlling a game application as a focus effect, according to an embodiment of the disclosure.

Referring to FIG. 16, the display apparatus 100 may display a server home user interface screen 1600, based on an identified type of an input device being currently used and information about one or more input devices capable of controlling each game application, received from the game server 300. The server home user interface screen 1600 may include one or more game application items. The server home user interface screen 1600 may include, for example, a first game application item 1610, a second game application item 1620, a third game application item 1630, and a fourth game application item 1640.

A user may move a focus on the first game application item 1610, the a second game application item 1620, the third game application item 1630, and the fourth game application item 1640 by a control of a remote controller 200a as an example of the input device 200. For example, an item focused by a control of the remote controller 200a may be displayed with a different color to represent that the item has been focused. It may be seen in FIG. 16 that, as a result of focusing the first game application item 1610 by a control of the remote controller 200a, the first game application item 1610 is displayed with a different color from that of the other items. While the first game application item 1610 is focused, the display apparatus 100 may change the color of the first game application item 1610 to another color and also further display additional information about a game application corresponding to the focused first game application item 1610. The additional information may include, for example, information about whether the corresponding game application is executable and controllable by the remote controller 200a which is an input device being currently used.

The display apparatus 100 may identify whether a first game application corresponding to the first game application item 1610 focused by the remote controller 200a is executable and controllable by a remote controller type of an input device, and based on the first game application being identified to be executable and controllable by the remote controller type of the input device, the display apparatus 100 may output a focus effect 1611 of <Playable with the current input device>, as shown in FIG. 16.

The third game application item 1630 may be focused by a control of the remote controller 200a. In this case, the display apparatus 100 may display the third game application item 1630 with a different color from that of the other items. Also, the display apparatus 100 may identify whether a third game application corresponding to the third game application item 1630 focused by the remote controller 200a is controllable by a remote controller type of an input device, and based on the third game application being identified not to be controllable by the remote controller type of the input device, the display apparatus 100 may output a focus effect 1631 of <Not playable with the current input device. The input device type for play is the gamepad>, as shown in FIG. 16.

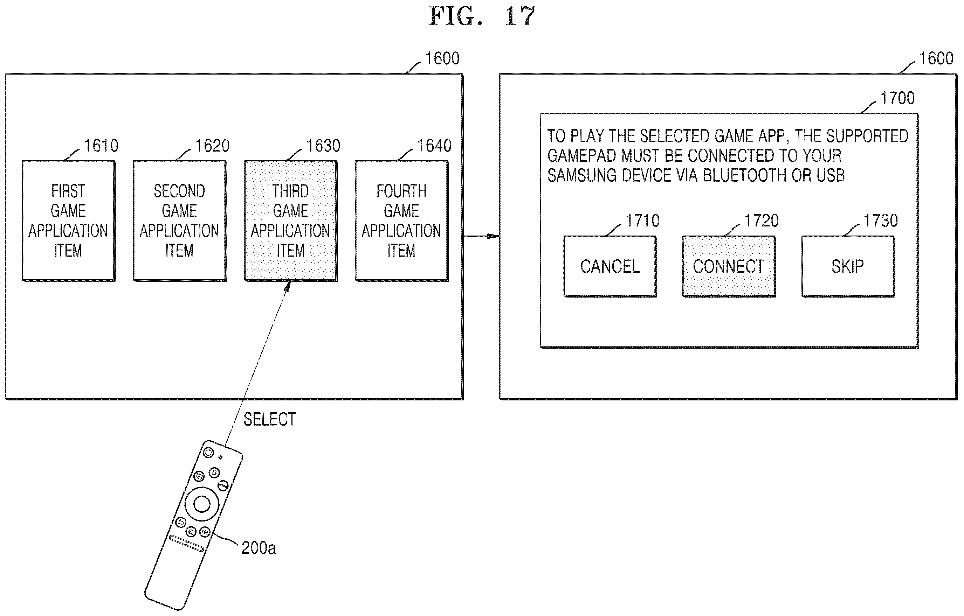

FIG. 17 is a reference view for describing an example of a message that is output according to a selection of a game application item, according to an embodiment of the disclosure.

Referring to FIG. 17, according to a selection of the third game application item 1630 through the remote controller 200a by a user, the display apparatus 100 may identity whether a third game application corresponding to the third game application item 1630 is controllable by the remote controller 200a which the user uses, and based on the third game application being identified not to be controllable by the remote controller 200a, the display apparatus 100 may output a guide message 1700.

The guide message 1700 may include a cancel item 1710, a connection item 1720, and a skip item 1730, together with a message <To play the selected game app, a supported gamepad may be connected to your Samsung device via Bluetooth or USB.>. The cancel item 1710 may be an item for canceling the selection of the third game application item 1630, the connection item 1720 may be an item for proceeding to a user interface screen for an operation of connecting to an input device capable of controlling the third game application, and the skip item 1730 may be an item for ignoring the guide message of the display apparatus 100 to execute the third game application.

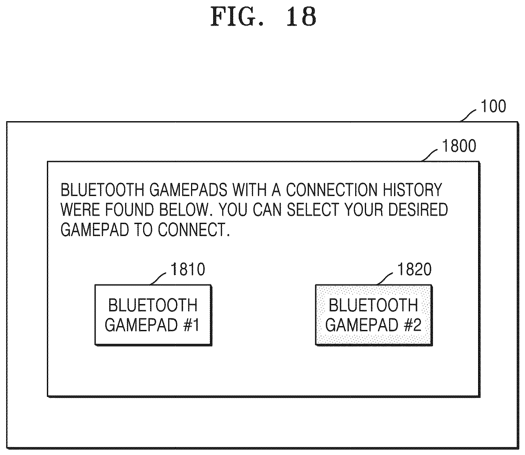

FIG. 18 is a reference view for describing an example of a message that is output according to a selection of a connection item in FIG. 17, according to an embodiment of the disclosure.

Referring to FIG. 17, the user may select the connection item 1720 by using the remote controller 200a. In this case, the display apparatus 100 may output a user interface 1800 as shown in FIG. 18.

More specifically, the display apparatus 100 may identify a type of an input device capable of controlling the third game application according to an input of selecting the connection item 1720, and identify an input device having a history of pairing with the display apparatus 100 from among input devices having the type of the input device. According to a result of identification that there is an input device having a history of pairing with the display apparatus 100 from among the input devices having the type of the input device capable of controlling the third game application, the display apparatus 100 may output a user interface inducing a connection to the input device having the history of pairing with the display apparatus 100.

Referring to FIG. 18, the display apparatus 100 may identify Bluetooth gamepad #1 and Bluetooth gamepad #2 as input devices having a history of pairing. In this case, the display apparatus 100 may output a user interface 1800 including an item 1810 of Bluetooth gamepad #1 and an item 1820 of Bluetooth gamepad #2, together with a message <Bluetooth gamepads with a connection history were found below. You can select your desired gamepad to connect>.

The display apparatus 100 may start an operation of connecting to Bluetooth gamepad #1 according to an input of selecting the item 1810 of Bluetooth gamepad #1, and according to an input of selecting the item 1820 of Bluetooth gamepad #2, the display apparatus 100 may start an operation of connecting to the Bluetooth gamepad #2.

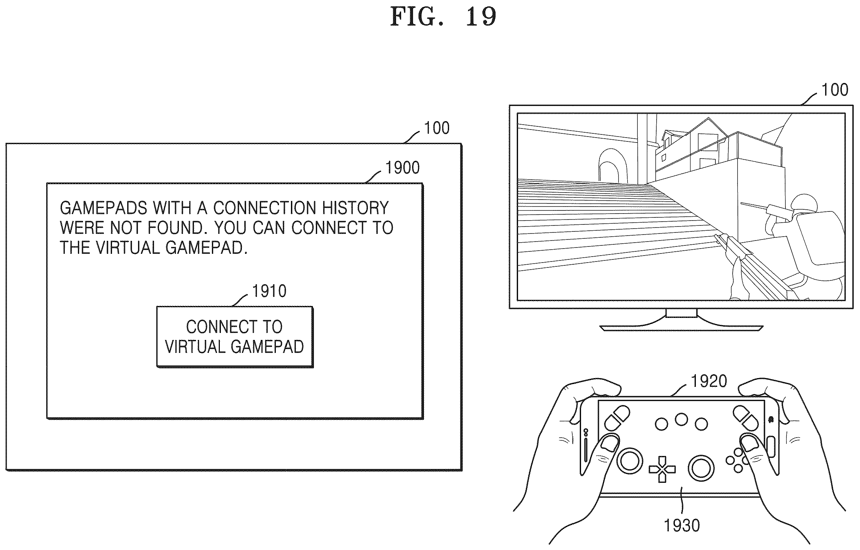

FIG. 19 is a reference view for describing an example of a message that is output according to a selection of the connection item in FIG. 17, according to an embodiment of the disclosure.

The display apparatus 100 may identify a type of an input device capable of controlling the third game application according to an input of selecting the connection item 1720 shown in FIG. 17, and identify an input device having a history of pairing with the display apparatus 100 from among input devices having the type of the input device. According to a result of identification that there is no input device having a history of pairing with the display apparatus 100 from among the input devices having the type of the input device capable of controlling the third game application, the display apparatus 100 may output a user interface 1900 inducing a connection to a virtual gamepad.

Referring to FIG. 19, the display apparatus 100 may output a user interface 1900 including a virtual gamepad connection item 1910, together with a message <Gamepads with a connection history were not found. You can connect to the virtual gamepad.>. The virtual gamepad is to use a mobile device such as a smart phone as a gamepad by implementing a user input interface of a gamepad in a touch type and displaying the user interface on the mobile device.

According to reception of an input of selecting a virtual gamepad connection item 1910, the display apparatus 100 may perform an operation of connecting to a virtual gamepad. For example, the display apparatus 100 may output a message inducing a user to download a virtual gamepad application for displaying a gamepad user interface screen 1930 on a mobile device 1920 from a server. Accordingly, after the user downloads the virtual gamepad application on his/her mobile device, the display apparatus 100 may establish communication with the mobile device through Bluetooth communication, USB communication, or Wi-Fi communication. Thereafter, the user may make a user input on a gamepad user interface screen displayed on the mobile device according to the virtual gamepad application, and then, the mobile device may transmit a control signal corresponding to the user input to the display apparatus 100 to transmit an input for controlling a game application to the display apparatus 100.

According to an embodiment of the disclosure, the display apparatus 100 may use a game application list in which types of input devices capable of executing and controlling each game application are subdivided into possible/recommended/required and stored. That is, there may be a plurality of input devices capable of controlling a game application. In this case, by dividing the plurality of input devices into one(s) set to 'possible' and one(s) set to 'recommended', it may be possible to detailedly inform the user of input devices that are more efficient for the user.

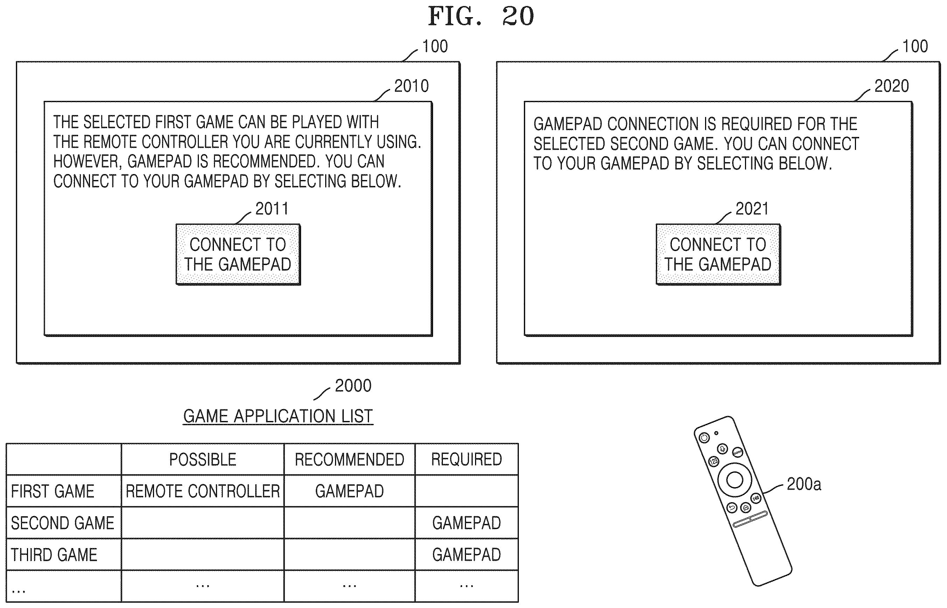

FIG. 20 is a reference view for describing an operation method using a game application list in which types of input devices capable of controlling each game application are subdivided into possible/recommended/required and stored, according to an embodiment of the disclosure.

Referring to FIG. 20, in a game application list 2000, a first game, a second game, a third game, etc. are mapped to types of input devices capable of controlling each of the game applications. In regard of the first game, remote controller is designated as <possible>, and gamepad is designated as <recommended>. Accordingly, gamepad is recommended for a control of the first game although a remote controller is usable. In regard of the second game and the third game, gamepad is designated as <required>. Accordingly, gamepad is used for a control of the second game and the third game.

According to reception of an input of selecting execution of the first game from the remote controller 200a by the display apparatus 100, the display apparatus 100 may output a user interface 2010 based on the game application list 2000. The user interface 2010 may include a game pad connection item 2011 together with a message <The selected first game can be played with the remote controller you are currently using. However, gamepad is recommended. You can connect to your gamepad by selecting below>.

According to reception of an input of selecting execution of the second game from the remote controller 200a by the display apparatus 100, the display apparatus 100 may output a user interface 2020 based on the game application list 2000. The user interface 2020 may include a gamepad connection item 2021 together with a message <Gamepad connection is required for the selected second game. You can connect to your gamepad by selecting below.>.

Some embodiments of the disclosure may be implemented in the form of a computer-readable recording medium including an instruction that is executable by a computer, such as a program module that is executed by a computer. The computer-readable recording medium may be an arbitrary available medium which is able to be accessed by a computer, and may include a volatile or non-volatile medium and a separable or non-separable medium. Further, the computer-readable recording medium may include a computer storage medium. The computer storage medium may include volatile and non-volatile media and separable and non-separable media implemented by an arbitrary method or technology for storing information such as a computer readable instruction, a data structure, a program module, or other data.

The disclosed embodiments may be implemented as an S/W program including instructions stored in computer-readable storage media.

A computer is a device capable of calling instructions stored in a storage medium and performing operations according to the disclosed embodiments according to the called instructions, and may include the electronic device according to the disclosed embodiments.

A computer-readable storage medium may be provided in the form of a non-transitory storage medium. Here, 'non-transitory' only means that the storage medium does not contain a signal and is tangible, but does not distinguish whether data is stored semi-permanently or temporarily in the storage medium.

Also, the control method according to the disclosed embodiments may be included in a computer program product and provided. Computer program products may be traded between sellers and buyers as commodities.

A computer program product may include a S/W program and a computer-readable storage medium in which the S/W program is stored. For example, the computer program product may include a product (for example, downloadable app) in the form of a S/W program electronically distributed through a device manufacturer or an electronic market (for example, Google Play Store, App Store). For electronic distribution, at least a part of the S/W program may be stored in a storage medium or temporarily generated. In this case, the storage medium may be a storage medium of a manufacturer's server, an electronic market server, or a relay server temporarily storing S/W programs.

A computer program product may include a storage medium of a server or a storage medium of a device in a system including the server and the device. Also, if there is a third device (for example, a smart phone) that is communicatively connected to the server or device, the computer program product may include a storage medium of the third device. Also, the computer program product may include a S/W program itself transmitted from the server to the device or the third device or from the third device to the device.

In this case, one of the server, the device and the third device may execute the computer program product to perform the method according to the disclosed embodiments. Also, two or more of the server, the device, and the third device may execute the computer program product to implement the method according to the disclosed embodiments in a distributed manner.

For example, a server (for example, a cloud server or an artificial intelligence server) may execute a computer program product stored in the server and control the device communicating with the server to perform the method according to the disclosed embodiments.

As another example, the third device may execute the computer program product to control a device communicating with the third device to perform the method according to the disclosed embodiments. When the third device executes the computer program product, the third device may download the computer program product from the server and execute the downloaded computer program product. Also, the third device may perform the method according to the disclosed embodiments by executing a computer program product provided in a preloaded state.

Also, in the present specification, the term "portion", "part", or "unit" may be a hardware component such as a processor or a circuit, and/or a software component that is executed by a hardware component such as a processor.

It should be understood that the above descriptions of the disclosure are merely for illustrative purposes, and therefore, it will be apparent that those skilled in the art can readily make various modifications thereto without changing the technical spirit and essential features of the present disclosure. Thus, it should be understood that the embodiments described above are merely for illustrative purposes and not for limitation purposes in all aspects. For example, each component described as a single type may be implemented in a distributed form, and likewise, components described in a distributed form may be implemented in a combined form.

The scope of the present disclosure is shown by the claims to be described below rather than the detailed description, and it is to be construed that the meaning and scope of the claims and all modifications or modified forms derived from the equivalent concept thereof are encompassed within the scope of the disclosure.

## Claims

1. A display apparatus 100 comprising:
a display 120;
a communication interface 110;
a memory 130configured to store at least one instruction;
a processor 140 configured to execute the at least one instruction stored in the memory to:
receive, from an input device, an input instructing execution of a game launcher providing at least one game application,
identify a type of the input device,
transmit information about the type of the input device to a game server corresponding to the game launcher,
receive, from the game server, information about the at least one game application that is controllable based on the type of the input device, and
configure a user interface screen provided by the game launcher based on the information about the at least one game application that is controllable based on the type of the input device, and display the user interface screen.

2. The display apparatus of claim 1, wherein the processor 140 is further configured to execute the at least one instruction to
configure the user interface screen to comprise a game list comprising the information about the at least one game application, and
arrange the at least one game application that are controllable based on the type of the input device to be distinguished from other game applications in the game list.

3. The display apparatus of claim 1or 2, wherein the processor 140 is further configured to execute the at least one instruction to
receive an input for executing a game application from the input device,
identify whether the game application is controllable based on the type of the input device,
execute the game application based on the game application being identified to be controllable based on the type of the input device, and
output a guide message based on the game application being identified not to be controllable based on the type of the input device.

4. The display apparatus of any one of claims 1 to 3, wherein the processor 140 is further configured to execute the at least one instruction to
identify at least one input device capable of executing and controlling a game application, based on the game application being identified not to be controllable based on the type of the input device, and
output a guide message comprising information about the at least one input device capable of controlling the game application.

5. The display apparatus of any one of claims 1 to 4, wherein the processor 140 is further configured to execute the at least one instruction to
identify an input device having a history of pairing with the display apparatus from the at least one input device capable of controlling a game application, and
display information indicating the history of pairing with respect to the input device having the history of pairing.

6. The display apparatus of any one of claims 1 to 5, wherein the processor 140 is further configured to execute the at least one instruction to
transmit information about the type of the input device to the game server based on a game application being identified to be controllable based on the type of the input device, and
receive, from the game server, in response to the transmitting of the information about the type of the input device, a game control user interface changed to correspond to a user input interface configuration of the input device.

7. The display apparatus of any one of claims 1 to 6, wherein
the processor is further configured to execute the at least one instruction to
receive, from the game server, information about at least one game application provided by the game server and information about at least one input device capable of controlling at least one game application, and
provide a visual effect to at least one game application item displayed on the user interface screen by using the information about the at least one input device capable of controlling the at least one game application.

8. The display apparatus of claim 7, wherein the processor is further configured to execute the at least one instruction to
based on the at least one game application item being focused on according to a user input, provide information about at least one input device capable of controlling a game application corresponding to the focused game application item, as a focus effect.

9. The display apparatus of any one of claims 1 to 8, wherein the input device comprises a remote controller.

10. A method of operating a display apparatus 100, the method comprising:
receiving, from an input device, an input instructing execution of a game launcher providing at least one game application;
identifying a type of the input device;
transmitting information about the type of the input device to a game server corresponding to the game launcher;
receiving, from the game server, information about one or more game applications that are controllable based on the type of the input device; and
configuring a user interface screen provided by the game launcher based on the information about the at least one game application that is controllable based on the type of the input device, and displaying the user interface screen.

11. The method of claim 10, further comprising:
configuring the user interface screen to comprise a game list comprising the information about the at least one game application; and
arranging the at least one game application that is controllable based on the type of the input device to be distinguished from other game applications in the game list.

12. The method of claim 10or 11, further comprising:
receiving an input for executing a game application from the input device,
identifying whether the game application is controllable based on the type of the input device,
executing the game application based on the game application being identified to be controllable based on the type of the input device, and
outputting a guide message based on the game application being identified not to be controllable based on the type of the input device.

13. The method of any one of claims 10 to 12, further comprising:
identifying at least one input device capable of controlling a game application, based on the game application being identified not to be controllable based on the type of the input device, and
outputting a guide message comprising an information about the at least one input device capable of controlling the game application.

14. The method of any one of claims 10 to 13, further comprising:
identifying an input device having a history of pairing with the display apparatus from at least one input device capable of controlling a game application; and
displaying information indicating the history of pairing with respect to the input device having the history of pairing.

15. A computer-readable recording medium on which at least one program that is executed by a processor of a display apparatus is recorded to implement a method of operating the display apparatus, the method comprising:
receiving, from an input device, an input instructing execution of a game launcher providing at least one game application;
identifying a type of the input device;
transmitting information about the type of the input device to a game server corresponding to the game launcher;
receiving, from the game server, information about at least one game application that is controllable based on the type of the input device; and
configuring a user interface screen provided by the game launcher based on the information about the at least one game application that are controllable based on the type of the input device, and displaying the user interface screen.
